# EUROPEAN PATENT SPECIFICATION

(11) **EP 4 109 824 B1**
(45) Date of publication and mention of the grant of the patent: **21.10.2026**
(21) Application number: 21796096.2
(22) Date of filing: 02.03.2021
(51) Int. Cl.: H04L 43/0876, H04L 41/142, H04L 43/04, H04L 41/40, H04L 43/20, H04L 41/12, H04L 43/0882

(54) **TRAFFIC MONITORING METHOD, RELATED DEVICE AND SYSTEM**
VERKEHRSÜBERWACHUNGSVERFAHREN, ZUGEHÖRIGE VORRICHTUNG UND SYSTEM
PROCÉDÉ DE SURVEILLANCE DE TRAFIC, DISPOSITIF ASSOCIÉ, ET SYSTÈME

(30) Priority: 30.04.2020 CN 202010366422
(43) Date of publication of application: 28.12.2022
(73) Proprietor: Huawei Technologies Co., Ltd., Shenzhen, Guangdong 518129, (CN)
(72) Inventor: HOU, Jie, Shenzhen, Guangdong 518129 (CN); LI, Lei, Shenzhen, Guangdong 518129 (CN); GONG, Jun, Shenzhen, Guangdong 518129 (CN); YAN, Gang, Shenzhen, Guangdong 518129 (CN)
(74) Representative: Epping - Hermann - Fischer
(86) International application number: PCT/CN2021/078609
(87) International publication number: WO 2021/218352

(56) References cited:
- CN-A- 101 707 554
- CN-A- 107 995 121
- IT-A1- RM20 100 279
- US-A1- 2007 177 506
- US-B1- 9 762 494
- LUO HONGBIN ET AL: "An approach for efficient, accurate, and timely estimation of traffic matrices", 2014 IEEE CONFERENCE ON COMPUTER COMMUNICATIONS WORKSHOPS (INFOCOM WKSHPS), IEEE, 27 April 2014 (2014-04-27), pages 67 - 72, XP032614014, DOI: 10.1109/INFCOMW.2014.6849170

## Description

### TECHNICAL FIELD

Embodiments of this application relate to the field of communication technologies, and in particular, to a traffic monitoring method, a related device, and a system.

### BACKGROUND

Currently, to facilitate management of a large network, the network is divided into different autonomous systems (autonomous systems, ASs). Each AS includes a group of forwarding nodes. These forwarding nodes may be devices such as routers or switches. Forwarding nodes in a same AS are managed by a same controller. To facilitate operation and maintenance management of the forwarding nodes in the AS, a traffic distribution feature in the AS needs to be monitored. Currently, in a conventional technology, statistics information of traffic passing through a network node needs to be collected by using another node other than the network node. Therefore, traffic monitoring is complex to implement.

Document H. Luo et al "An Approach for Efficient, Accurate, and Timely Estimation of Traffic Matrices", XP032614014, describes requirements for traffic matrix estimation and corresponding implications on a future internet architecture. Based on these implications, a future Internet architecture is described that makes it easy to accurately, efficiently, and timely estimate traffic matrices.

Document IT RM20 100 279 A1 describes a traffic measurement in packet telecommunications networks.

### SUMMARY

Embodiments of this application provide a traffic monitoring method, a related device, and a system, so that a network node can collect statistics on traffic passing through the network node. Traffic in a network can be monitored more flexibly. The present invention is described by the attached set of claims.

According to a first aspect, a traffic monitoring method is provided. The method is applied to a control node in a network, and the network further includes a plurality of network nodes. The method includes: obtaining traffic statistics data collected by each of the plurality of network nodes; and determining a traffic distribution feature in the network based on the traffic statistics data collected by each network node. Traffic statistics data collected by a first network node in the plurality of network nodes includes a traffic count result of traffic from the first network node to a destination network node that belongs to a same area as the first network node, the destination network node includes an egress node on a path for forwarding a packet by the first network node in the area, and the traffic count result includes a total count of packets forwarded by the first network node to the destination network node.

In this embodiment of this application, to facilitate the control node to analyze a traffic distribution feature in a communication network, for any network node in the network, each of destination network nodes of the network node respectively corresponds to one traffic count result. For the first network node, because destination network nodes of the first network node include the egress node on the path for forwarding a packet by the first network node in the same area, the control node may learn of, based on traffic count results corresponding to the destination network nodes, traffic transmitted from the first network node to egress nodes. This facilitates the control node to determine the traffic distribution feature in the network. In other words, this embodiment of this application provides a method that network nodes collect local aggregated traffic statuses, and then the control node determines the traffic distribution feature in the communication network based on the local aggregated traffic statuses collected by the network nodes. This avoids a case in which traffic statistics information collected by a node other than a forwarding node is used to implement traffic monitoring.

According to the traffic monitoring method provided in the first aspect, in a possible implementation, the traffic distribution feature includes a total count of traffic forwarded to a first link by using the first network node as a source node, the first link is a link from a second network node to a third network node, and the second network node and the third network node are network nodes in the plurality of network nodes. In this scenario, an implementation process of determining a traffic distribution feature in the network based on the traffic statistics data collected by each network node may be: determining, based on the traffic statistics data collected by the first network node, the total count of the traffic transmitted to the first link through the first network node, to obtain a first count result; determining, based on traffic statistics data collected by an upstream node of the first network node, a total count of traffic transmitted to the first link through the upstream node of the first network node, to obtain a second count result, where the upstream node is a node that is in the plurality of network nodes and that is on a path including the first network node that forwards a packet to the first link; and calculating a difference between the first count result and the second count result, and using the difference as the total count of the traffic forwarded to the first link by using the first network node as the source node.

Because the network nodes may collect the local aggregated traffic statuses, the control node may directly determine, based on traffic data collected by the network nodes, traffic from the network nodes to a specified link, and further determine that traffic on the specified link includes traffic sent by which source nodes. This can improve efficiency of determining, by the control node, a traffic distribution feature on the specified link.

According to the traffic monitoring method provided in the first aspect, in a possible implementation, the foregoing implementation process of determining, based on the traffic statistics data collected by the first network node, the total count of the traffic transmitted to the first link through the first network node may be: determining that paths from the first network node to the destination network node include a path of the first link, and using the destination network node corresponding to the determined path as a statistics node; obtaining, from the traffic statistics data collected by the first network node, a traffic count result corresponding to the statistics node; and determining, based on the traffic count result corresponding to the statistics node, the total count of the traffic transmitted to the first link through the first network node.

The network nodes may collect traffic to destination network nodes through the network nodes. Therefore, the nodes may determine, based on paths from the nodes to the destination network nodes, traffic to a specified link through the nodes, to implement the traffic monitoring method provided in this embodiment of this application.

According to the traffic monitoring method provided in the first aspect, in a possible implementation, before the determining, based on traffic statistics data collected by an upstream node of the first network node, a total count of traffic transmitted to the first link through the upstream node of the first network node, the method may further include: determining paths for forwarding a packet to the first link by network nodes in the plurality of network nodes; and obtaining, from the determined paths, a path that includes the first network node, and using a network node corresponding to the obtained path as the upstream node of the first network node.

In the foregoing implementation, the control node may determine the upstream node of the first network node, to implement the traffic monitoring method provided in this embodiment of this application.

According to the traffic monitoring method provided in the first aspect, when paths for forwarding a packet to a same destination address by the first network node include a plurality of egress nodes, a total count of packets forwarded by the first network node to the plurality of egress nodes is used as a traffic count result corresponding to one virtual destination network node.

For the packet forwarded by the first network node to the same destination address, although there may be a plurality of egress nodes, if the first network node has only one next hop, for the first network node, only a total count of traffic to the next hop needs to be counted. An egress node from which the traffic is transmitted may be determined based on traffic statistics data collected by a downstream node of the first network node. Therefore, in this embodiment of this application, for the plurality of egress nodes, one virtual destination network node may be configured to replace the plurality of egress nodes, to improve efficiency of collecting traffic data by the first network node.

According to the traffic monitoring method provided in the first aspect, in a possible implementation, when there are a plurality of next-hop nodes on paths from the first network node to a same destination network node, a count result corresponding to the same destination network node includes a plurality of count results respectively corresponding to the plurality of next-hop nodes, and each of the plurality of count results includes a total count of packets that forward traffic to the same destination network node through a corresponding next-hop node.

For traffic from the first network node to the same destination network node, if the first network node has a plurality of next hops, it indicates that there are a plurality of paths to the same destination network node. In this case, traffic may be separately counted for the plurality of next hops, to further obtain the traffic on the paths. This facilitates more comprehensive and refined monitoring of traffic in the communication network.

According to the traffic monitoring method provided in the first aspect, in a possible implementation, the total count is a total quantity of the packets or a total quantity of bytes of the packets.

Monitoring traffic may be collecting statistics on a quantity of forwarded packets, or collecting statistics on total bytes of forwarded packets. This can improve flexibility of the traffic monitoring method provided in this embodiment of this application.

According to a second aspect, a traffic monitoring method is provided. The method is applied to a first network node in a network. The method includes:
obtaining traffic statistics data, where the traffic statistics data includes a traffic count result of traffic from the first network node to a destination network node that belongs to a same area as the first network node, the destination network node includes an egress node on a path for forwarding a packet by the first network node in the area, and the traffic count result includes a total count of packets forwarded by the first network node to the destination network node; and sending the traffic statistics data to a control node in the network.

In this embodiment of this application, to facilitate the control node to analyze a traffic distribution feature in a communication network, for any network node in the network, each of destination network nodes of the network node respectively corresponds to one traffic count result. Because the destination network nodes of the network node include an egress node on a path for forwarding a packet by the network node in a same area, the control node may learn of, based on the traffic count results corresponding to the destination network nodes, traffic transmitted from the network node to the egress nodes. This facilitates the control node to determine the traffic distribution feature in the network. In other words, this embodiment of this application provides a method that network nodes collect local aggregated traffic statuses, and then the control node determines the traffic distribution feature in the communication network based on the local aggregated traffic statuses collected by the network nodes.

According to the traffic monitoring method provided in the second aspect, the method includes: obtaining a first destination address of a to-be-forwarded first packet; determining a first destination network node based on the first destination address, where the first destination network node includes an egress node on a path for forwarding the first packet by the first network node in the area; and updating a traffic count result corresponding to the first destination network node.

To implement accurate traffic monitoring, the network node can update a traffic count result each time the network node forwards a packet.

According to the traffic monitoring method provided in the second aspect, in a possible implementation, an implementation of the determining a first destination network node based on the first destination address may be: obtaining, from a correspondence between a destination address and a destination network node, a destination network node corresponding to the first destination address, to obtain the first destination network node.

The network node may generate the foregoing correspondence in advance, so that the traffic count result can be quickly updated when forwarding a packet.

According to the traffic monitoring method provided in the second aspect, when there is one egress node on paths for forwarding the packets to the first destination address by the first network node, the first destination network node is an egress node on the path for forwarding the first packet to the first destination address by the first network node. According to the traffic monitoring method provided in the second aspect, in another possible implementation, when there are a plurality of egress nodes on a path for forwarding the first packet to the first destination address by the first network node, the first destination network node is a virtual destination network node corresponding to the plurality of egress nodes.

For a packet forwarded by the first network node to a same destination address, although there may be a plurality of egress nodes, if the first network node has only one next hop, for the first network node, only a total count of traffic to the next hop needs to be counted. An egress node from which the traffic is transmitted may be determined based on traffic statistics data collected by a downstream node of the first network node. Therefore, in this embodiment of this application, for the plurality of egress nodes, one virtual destination network node may be configured to replace the plurality of egress nodes, to improve efficiency of collecting traffic data by the first network node.

According to the traffic monitoring method provided in the second aspect, in a possible implementation, the traffic count result corresponding to the first destination network node includes traffic count results respectively corresponding to next-hop nodes, and a traffic count result corresponding to any next-hop node includes a total count of packets forwarded to the first destination network node through the corresponding next-hop node. In this scenario, an implementation process of the updating a traffic count result corresponding to the first destination network node may be: obtaining, from a routing and forwarding table, one or more next-hop nodes corresponding to the first destination address, where the routing and forwarding table includes next-hop nodes respectively corresponding to a plurality of destination addresses; selecting, from the one or more next-hop nodes, a next-hop node that forwards the first packet, to obtain a target next-hop node; and updating a traffic count result corresponding to the target next-hop node in the traffic count result corresponding to the first destination network node.

For traffic from the network node to a same destination network node, if the network node has a plurality of next hops, it indicates that there are a plurality of paths to the same destination network node. In this case, traffic may be separately counted for the plurality of next hops, to further obtain the traffic on the paths. This facilitates more comprehensive and refined monitoring of traffic in the communication network.

According to the traffic monitoring method provided in the second aspect, in a possible implementation, the first destination network node corresponds to a counter array, and the counter array includes counters respectively corresponding to the next-hop nodes on a path for forwarding a packet to the first destination network node by the first network node, and the counter includes a traffic count result corresponding to a corresponding next-hop node. In this scenario, an implementation process of the updating a traffic count result corresponding to the target next-hop node may be: searching for a counter corresponding to the target next-hop node; and updating a traffic count result in the found counter.

In this embodiment of this application, statistics on the traffic count result may be collected by using a hardware counter. This can improve flexibility of the traffic monitoring method provided in this embodiment of this application. According to the traffic monitoring method provided in the second aspect, in a possible implementation, a start address of the counter array corresponding to the first destination network node is further configured for the first destination address in the routing and forwarding table. In this scenario, an implementation process of the searching for a counter corresponding to the target next-hop node may be: determining, based on the target next-hop node and the start address of the counter array corresponding to the first destination network node configured for the first destination address in the routing and forwarding table, an address of the counter corresponding to the target next-hop node; and searching, based on the address of the counter corresponding to the target next-hop node, for the counter corresponding to the target next-hop node.

When the hardware counter is deployed to collect statistics on the traffic count result, a routing and forwarding table in the conventional technology may be expanded, and a start address of a counter array is added to the routing and forwarding table. Because offset addresses of counters corresponding to next hops relative to the start address of the counter array is known, after a next hop is determined, an address of a to-be-updated counter may be determined based on the next hop. After the address of the counter is obtained, the counter may be found based on the address, to update a count result stored in the counter.

According to the traffic monitoring method provided in the second aspect, in a possible implementation, the total count is a total quantity of the packets or a total quantity of bytes of the packets.

Monitoring traffic may be collecting statistics on a quantity of forwarded packets, or collecting statistics on total bytes of forwarded packets. This can improve flexibility of the traffic monitoring method provided in this embodiment of this application.

According to a third aspect, a control node is provided. The control node has functions of implementing behaviors in the traffic monitoring method in the first aspect. The control node includes at least one module, and the at least one module is configured to implement the traffic monitoring method provided in the first aspect.

According to a fourth aspect, a first network node is provided. The first network node has functions of implementing behaviors in the traffic monitoring method in the second aspect. The network node includes at least one module, and the at least one module is configured to implement the traffic monitoring method provided in the second aspect. According to a fifth aspect, a control node is provided. The control node includes a memory and a processor.

The memory is configured to store a computer program.

The processor is configured to execute the computer program stored in the memory, to perform the method according to any one of the implementations of the first aspect.

According to a sixth aspect, a first network node is provided. The network node includes a memory and a processor. The memory is configured to store a computer program.

The processor is configured to execute the computer program stored in the memory, to perform the method according to any one of the implementations of the second aspect.

According to a seventh aspect, a chip is provided. The chip is disposed in a control node, and the chip includes a processor and an interface circuit.

The interface circuit is configured to receive instructions and transmit the instructions to the processor.

The processor is configured to perform the method according to any one of the implementations of the first aspect. According to an eighth aspect, a chip is provided. The chip is disposed in a first network node, and the chip includes a processor and an interface circuit.

The interface circuit is configured to receive instructions and transmit the instructions to the processor.

The processor is configured to perform the method according to any one of the implementations of the second aspect. According to a ninth aspect, a computer-readable storage medium is provided. The computer-readable storage medium stores instructions. When the instructions are run on a computer, the computer is enabled to perform the traffic monitoring method according to the first aspect or the second aspect.

According to a tenth aspect, a computer program product including instructions is provided. When the instructions are run on a computer, the computer is enabled to perform the traffic monitoring method according to the first aspect or the second aspect.

According to an eleventh aspect, a traffic monitoring system is provided. The system includes a control node and a plurality of network nodes.

A first network node in the plurality of network nodes is configured to implement the method according to any one of the implementations of the second aspect, and the first network node is any one of the plurality of network nodes. The control node is configured to implement the method according to any one of the implementations of the first aspect.

Technical effects obtained in the third aspect to the eleventh aspect are similar to technical effects obtained by using corresponding technical means in the first aspect and the second aspect. Details are not described herein again.

### BRIEF DESCRIPTION OF DRAWINGS

FIG. 1 is a schematic diagram of a system of a communication network according to an embodiment of this application;
FIG. 2 is a schematic diagram of transferring link status information according to an embodiment of this application;
FIG. 3 is a schematic diagram of a process of generating a routing and forwarding table according to an embodiment of this application;
FIG. 4 is a flowchart of a traffic monitoring method according to an embodiment of this application;
FIG. 5 is a schematic diagram of a scenario of determining an intra-area destination node according to an embodiment of this application;
FIG. 6 is a schematic diagram of a routing and forwarding table according to an embodiment of this application;
FIG. 7 is a schematic diagram of an architecture of another communication network according to an embodiment of this application;
FIG. 8 is a schematic diagram of traffic distribution of the node A in the communication network shown in FIG. 7 according to an embodiment of this application;
FIG. 9 is a schematic diagram of minimum spanning trees of nodes in the communication network shown in FIG. 7 according to an embodiment of this application;
FIG. 10 is a schematic diagram of topology optimization in the communication network shown in FIG. 7 according to an embodiment of this application;
FIG. 11 is a schematic diagram of a structure of a network device according to an embodiment of this application;
FIG. 12 is a schematic diagram of a structure of a network device according to an embodiment of this application;
FIG. 13 is a schematic diagram of a structure of an interface board in the network device shown in FIG. 12 according to an embodiment of this application;
FIG. 14 is a schematic diagram of a structure of a control node in a communication network according to an embodiment of this application;
FIG. 15 is a schematic diagram of a structure of a first network node in a communication network according to an embodiment of this application; and
FIG. 16 is a schematic diagram of a structure of another network device according to an embodiment of this application.

### DESCRIPTION OF EMBODIMENTS

To make the objectives, technical solutions, and advantages of this application clearer, the following further describes the implementations of the embodiments of this application in detail with reference to the accompanying drawings.

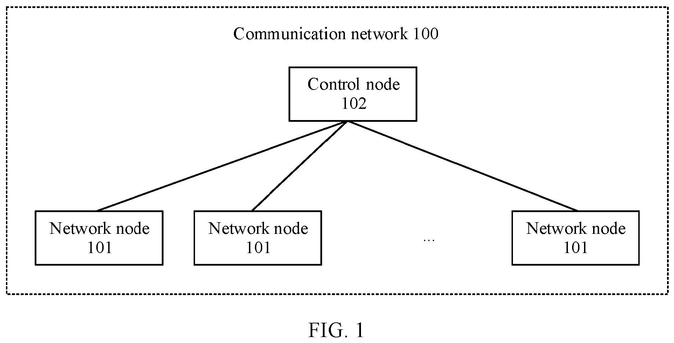

FIG. 1 is a schematic diagram of a system of a communication network according to an embodiment of this application. As shown in FIG. 1, the communication network 100 includes a plurality of network nodes 101 and a control node 102. Any network node 101 may communicate with the control node 102.

Each of the network nodes 101 in FIG. 1 are configured to forward a packet, and collect traffic statistics data based on the packet forwarded by the network nodes 101. The control node 102 is configured to analyze a traffic distribution feature in the communication network based on the traffic statistics data collected by network nodes 101.

In a possible implementation, the network node 101 may actively report, to the control node 101, the traffic statistics data collected by the network node 101. In another possible implementation, the control node 102 may request, from the network node 101, the traffic statistics data collected by the network node 101. A specific implementation of how the control node obtains the traffic statistics data collected by the network node is not limited in this embodiment of this application. In this embodiment of this application, an obtaining manner may be adaptively selected based on a required scenario.

For example, in a scenario in which the traffic distribution feature in the communication network needs to be periodically determined, the network nodes may be configured to periodically proactively report the traffic statistics data collected by the network nodes. For another example, in a scenario in which network congestion occurs, the control node needs to determine the traffic distribution feature in the communication network to analyze a congestion cause. In this case, the control node may deliver a request message to the network node, so that the network node passively reports the traffic statistics data collected by the network node.

The communication network shown in FIG. 1 may be one AS. In this case, the control node is a control node configured to manage all network nodes in the AS. In this scenario, the network nodes shown in FIG. 1 execute a common routing protocol, to implement packet forwarding in the communication network.

In this embodiment of this application, the network nodes in the AS may exchange routing information based on an interior gateway protocol (interior gateway protocol, IGP), so that each network node can learn of a network node topology structure of the communication network, and automatically generate a routing and forwarding table.

A link status routing protocol is a type of interior gateway protocol, including, for example, the open shortest path first (open shortest path first, OSPF) protocol, and the intermediate system to intermediate system (intermediate system to intermediate system, ISIS) protocol. In the link status routing protocol, each network node generates link status information (link-state advertisement, LSA) about a directly connected network of the network node. The link status information includes information such as adjacent network node information of the network node and an address of a device connected to the network node. The link status information is transmitted to another network node through an adjacent network node. In this way, each network node in the communication network keeps a copy of the link status information, but does not change it. Finally, each network node stores link status information of the other network nodes in the entire network. The entire network topology structure of the communication network can be learned by using the link status information of the network nodes in the entire network. In this way, each network node has same information about the topology structure of the communication network. Then, each network node can use a "shortest path first" algorithm to calculate an optimal route to destination addresses, and generate the routing and forwarding table. The routing and forwarding table includes route information to the destination addresses, and the routing and forwarding table may also be referred to as a forwarding entry or the like.

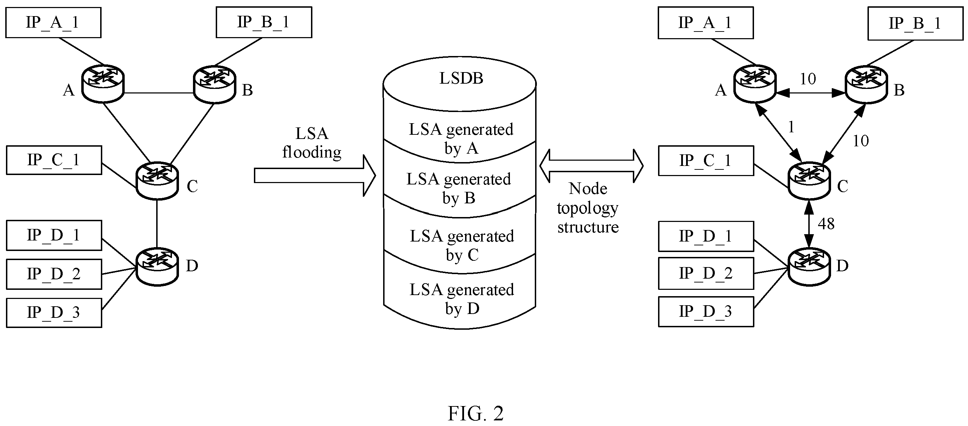

FIG. 2 is a schematic diagram of transferring link status information according to an embodiment of this application. As shown in FIG. 2, network nodes report link status information to each other. A node A is used as an example. The node A sets its adjacency status (the adjacency status includes information that the node A is adjacent to nodes B and C, and also includes an address IP_A_1 of a directly connected device, where the address IP_A_1 of the device is a destination address of a packet transmitted in a communication network) as link status information (LSA), and then advertises the link status information to its neighbor node B and node C. After receiving the link status information, the node B and the node C advertise the link status information sent by the node A to other neighbors of the node B and the node C, so that all other nodes in the network can receive the link status information generated by the node A. Similarly, the node B, the node C, and a node D can report their link status information in the foregoing manner. The foregoing process may be referred to as "flooding LSA". Finally, each network node obtains a complete network state database (link state database, LSDB). The network state database includes link status information generated by the network nodes.

As shown in FIG. 2, by using the LSDB, the network nodes obtain a node topology structure in the communication network. The node topology structure is used to indicate a connection relationship between the nodes. In addition, when the network nodes advertise the link status packet information, the link status information may further include a cost value of an advertised link. Therefore, cost values of links may be further indicated in the LSDB. As shown in FIG. 2, a cost value of a link A → B is 10.

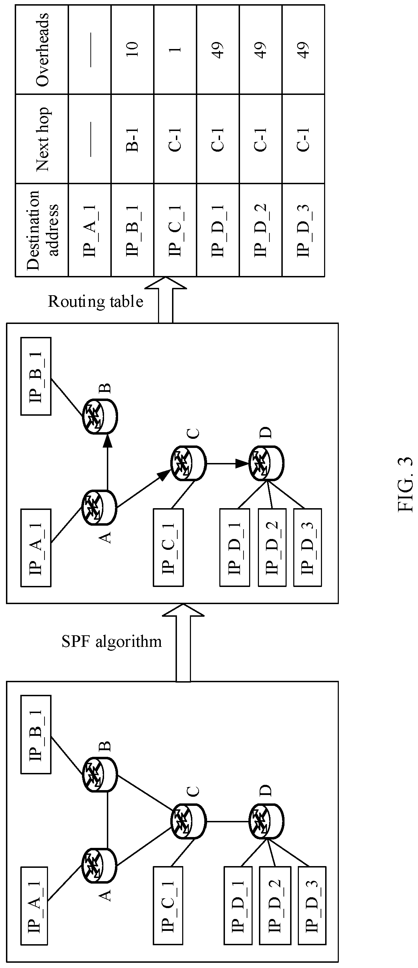

For any network node in the communication network, after learning of the LSDB, the network node may generate a local routing and forwarding table based on the LSDB. As shown in FIG. 3, the node A is used as an example. Based on the LSDB, the node A runs the shortest path first (shortest path first, SPF) algorithm to generate a tree topology that includes shortest paths from the node A to the network nodes and where the node A is a root, that is, a minimum spanning tree (or may also be referred to as a shortest path tree). Based on information in the minimum spanning tree, the node A may generate routing forwarding information from A to destination addresses (IP_A_1, IP_B_1, and the like.). As shown in FIG. 3, the routing and forwarding table includes next-hop information to any destination address of IP_A_1, IP_B_1, IP_C_1, IP_D_1, IP_D_2, and IP_D_3, and a total cost of a path from a current node to a destination address. The routing and forwarding table is used to indicate next-hop information to a specified destination address and a total link cost (COST) on a path to the specified destination address. The routing and forwarding table may also include an egress port to a next hop. In addition, the SPF algorithm may be a shortest path first algorithm, for example, a Dijkstra algorithm.

Optionally, when a network in the AS is large, to control an LSA flooding scale and an SPF calculation scale, the AS may also be divided into a plurality of areas (areas), and network nodes in each area generate intra-area link status information by using the method in FIG. 2. Link status information of network nodes in another area is imported based on an internal network protocol by using an area border network node, to generate a local routing and forwarding table based on the intra-area link status information and link status information of a network node in the another area. In this case, the generated local routing and forwarding table is consistent with the routing and forwarding table shown in FIG. 3. The area border network node is a network node that is located in a plurality of areas at the same time. Therefore, when obtaining link status information of a network node in one area, the area border network node may continue to flood the link status information of the network node in another area.

When the AS is divided into the plurality of areas, the communication network shown in FIG. 1 may be a network corresponding to any one of the plurality of areas included in the AS. In this case, the control node may be a level-1 control node configured for the areas. In this case, determined traffic status distribution is traffic status distribution for one area. Optionally, in this case, the control node may also be a level-2 control node configured for the entire AS. In this case, the control node may obtain, from level-1 control nodes configured for the areas, traffic statistics data collected by all the network nodes in the AS, to determine traffic status distribution for the entire AS.

It can be learned that the communication network shown in this embodiment of this application may be a network corresponding to the AS, or may be a network corresponding to an area obtained by dividing the AS. This is not specifically limited in this embodiment of this application.

In addition, the network node in FIG. 1 may also be referred to as a network element, a forwarding node, a forwarding device, or the like. This is not specifically limited herein. The control node in FIG. 1 may be a device such as a controller in a communication network or a centralized network performance analyzer. Optionally, the controller may also be a network node with a control function. The network node may be a device, for example, a router, or a layer-3 switch, which is also not specifically limited herein.

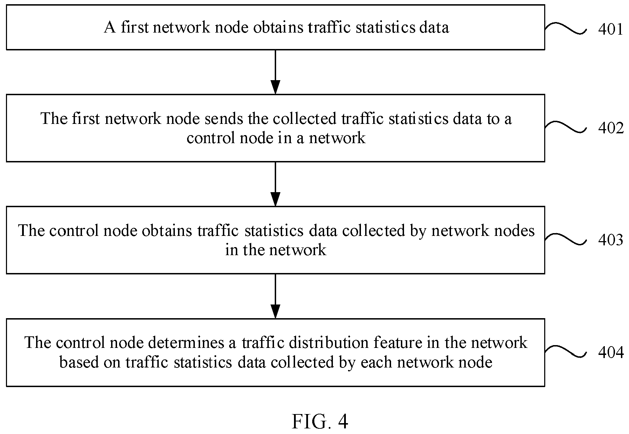

The following describes the traffic monitoring method provided in the embodiments of this application. The traffic monitoring method provided in this embodiment of this application mainly includes two parts of content. One part of content describes how a network node collects traffic statistics data, and the other part of content describes how a control node determines a traffic distribution feature in a communication network based on the traffic statistics data collected by the network node. The following embodiments explain and describe the foregoing two parts of content. FIG. 4 is a flowchart of a traffic monitoring method according to an embodiment of this application. The method may be applied to the communication network shown in FIG. 1. As shown in FIG. 4, the method includes the following steps.

Step 401: A first network node obtains traffic statistics data.

The first network node in step 401 is any network node in a plurality of network nodes included in the communication network.

In this embodiment of this application, to facilitate a control node to analyze a traffic distribution feature in the communication network, for any network node in the communication network, each of destination network nodes that belongs to a same area as the network node respectively corresponds to one traffic count result. For the first network node, a destination network node of the first network node includes an egress node on a path for forwarding a packet by the first network node in the area. It should be noted that there may be one or more destination network nodes of the first network node. A traffic count result corresponding to any destination network node includes a total count of packets forwarded by the first network node to the corresponding destination network node. In this way, after forwarding the packet, the first network node may update a corresponding traffic count result based on the egress node on the path for forwarding a packet, so that the first network node can locally collect statistics on forwarded traffic. Because the destination network nodes include the egress node on the path for forwarding a packet by the first network node in the area, the control node may learn of, based on traffic count results corresponding to the destination network nodes, traffic count results of traffic transmitted from the first network node to egress nodes. This facilitates the control node to subsequently determine the traffic distribution feature in the network.

The total count of the packets may be a total quantity of sent packets (for example, a quantity of total packets), or may be a total quantity of bytes of sent packets. This is not specifically limited in this embodiment of this application. How the first network node updates the corresponding traffic count result is described in detail in the following content. For ease of subsequent description, the following first describes the destination network node.

The communication network shown in FIG. 1 may be a network corresponding to one AS, or may be a network corresponding to an area in one AS. Therefore, the area in step 401 may be one AS, or may be an IGP area (area) in the AS. Regardless of a type of the communication network, the destination network node of the first network node is the egress node on the path for forwarding a packet by the first network node in the area in which the first network node is located, that is, an egress node that belongs to the same area as the first network node. Because the destination network node and the first network node are located in the same area, the destination network node may also be referred to as an intra-area destination node in this embodiment of this application.

If the communication network shown in FIG. 1 is the network corresponding to one AS, the destination network node of the first network node may be directly determined based on an egress node for forwarding a packet by each network node in the communication network.

If the communication network shown in FIG. 1 is the network corresponding to an area in one AS, the destination network node of the first network node may also be directly determined based on an egress node for forwarding a packet by each network node in the area.

For example, an implementation of determining the destination network node of the first network node may be as follows: The first network node obtains, based on a link state protocol, link status information of the network nodes in the network, and obtains, from the link status information of the network nodes, addresses of devices connected to the network nodes in the network, to obtain all destination addresses. The device may be a host or a network node. For any destination address, a path for forwarding a packet to the destination address by the first network node is obtained based on the minimum spanning tree shown in FIG. 3, and an egress node for forwarding a packet by the first network node in the communication network may be determined from the path. A destination network node for the destination address may be determined based on the egress node. In this way, for destination addresses, a corresponding destination network node is usually obtained based on one destination address. In addition, because a same network node may be connected to a plurality of hosts (for example, the node D in FIG. 3), a plurality of destination addresses may correspond to a same destination network node.

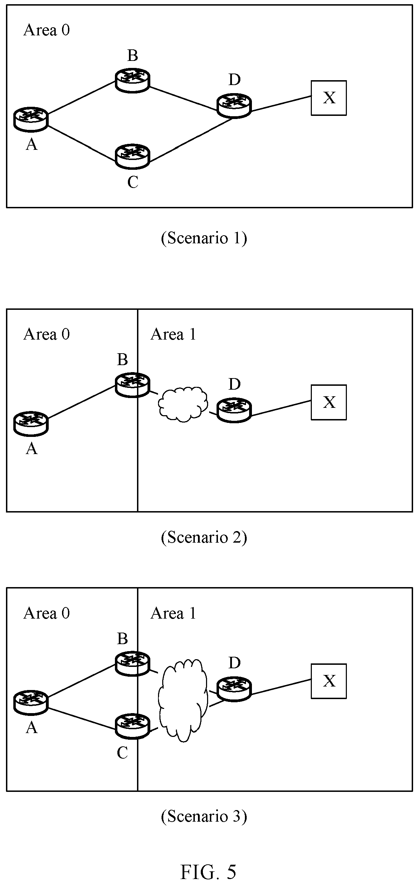

Three scenarios shown in FIG. 5 are used to further clearly explain the destination network node.

In a scenario 1 shown in FIG. 5, it is assumed that the first network node is a node A. For a packet whose destination address is X, the destination address X is an address of a device directly connected to a node D, and the node D is a node located in a same area (an area 0) as the node A. In this case, the node D may be directly determined as a destination network node of the node A.

In a scenario 2 shown in FIG. 5, it is assumed that the first network node is a node A. For a packet whose destination address is X, the destination address X is an address of a device directly connected to a node D that is not in a same area as the node A. The first network node can forward the packet to the node D only after forwarding the packet through a boundary network node B located in the same area. In this case, the node B may be determined as a destination network node of the node A.

In a scenario 3 shown in FIG. 5, it is assumed that the first network node is a node A. For a packet whose destination address is X, the destination address X is an address of a device directly connected to a node D that is not in a same area as the node A. The first network node can forward the packet to the node D after forwarding the packet through a boundary network node B or a boundary network node C. In this case, the node B and the node C may be determined as destination network nodes of the node A.

Further, for the scenario 3 shown in FIG. 5, when traffic whose destination address is X and that is forwarded by the node A is determined, if the node A has only one next hop, the node A only needs to collect statistics on a total count of traffic that arrives at the next hop. An egress node from which a portion of the traffic is transmitted may be determined based on a traffic count result collected by a downstream node of the node A. Therefore, in this scenario, one virtual destination network node may be configured for the node B and the node C. A total count of traffic sent to the node B or the node C collected by the node A at later time may be considered as a total count of traffic sent to the virtual destination node.

In other words, when egress nodes on a path for forwarding a packet to a same destination address by the first network node include a plurality of egress nodes, a total count of packets forwarded by the first network node to the plurality of egress nodes is used as a traffic count result corresponding to one virtual destination network node. In this case, for the first network node, one destination address corresponds to one destination network node.

After the destination network node is determined for the first network node, for any determined destination network node, there may be a case in which there is more than one next-hop node on a path from the first network node to the destination network node. In this case, traffic transmitted to the destination network node on a specific path may be counted, so that a more comprehensive and detailed traffic distribution feature can be subsequently analyzed.

In other words, for the first destination network node in destination network nodes of the first network node, when there are a plurality of next-hop nodes on a path from the first network node to the first destination network node, a count result corresponding to the first destination network node includes a plurality of count results respectively corresponding to the plurality of next-hop nodes, and a count result corresponding to any next-hop node includes a total count of packets forwarded to the first destination network node through the corresponding next-hop node. The next-hop node may be a next network node on a path for forwarding a packet by the first destination network node, or may be an egress port for forwarding a packet to a next network node by the first network node, namely, a next-hop egress port.

For example, for the scenario 1 shown in FIG. 5, a count result for the destination network node D may include a count result corresponding to the next-hop node B and a count result corresponding to the next-hop node C. The count result corresponding to the next-hop node B includes a total count of traffic sent from the node A to the node D through the node B. The count result corresponding to the next-hop node C includes a total count of traffic sent from the node A to the node D through the node C.

In addition, in this embodiment of this application, a software module deployed in the first network node may be used to collect statistics on a forwarded packet, to obtain the traffic count result. Alternatively, a hardware counter deployed in the first network node may be used to collect statistics on a forwarded packet. This is not specifically limited in this embodiment of this application.

When collecting the traffic statistics data by using a counter, each destination network node may correspond to one counter array. For the first destination network node in the destination network nodes, a counter array corresponding to the first destination network node includes counters respectively corresponding to next-hop nodes on the path for forwarding a packet to the first destination network node by the first network node. Each counter includes a traffic count result corresponding to a corresponding next-hop node. In other words, a quantity of counters included in each counter array is the same as a quantity of next-hop nodes through which the first network node arrives at a corresponding destination network node. The first destination network node is any one of the destination network nodes of the first network node. Similarly, the next-hop nodes may be a next network node on a path for forwarding a packet by the first destination network node, or may be an egress port for forwarding a packet to a next network node by the first network node, namely, a next-hop egress port.

For example, for the scenario 1 shown in FIG. 5, it is assumed that there is no other node between the node A and the node B, and there is no other node between the node A and the node C. The node B and the node C are respectively two next-hop nodes to which the node A forwards the packet carrying the destination address X. In this case, a counter array corresponding to the destination network node D of the node A includes two counters: a counter corresponding to the next-hop node B and a counter corresponding to the next-hop node C. The counter corresponding to the next-hop node B is used to record the total count of traffic forwarded from the node A to the node D through the node B. The counter corresponding to the next-hop node C is used to record the total count of traffic forwarded from the node A to the node D through the node C.

For another example, for the scenario 2 shown in FIG. 5, it is assumed that there is no other node between the node A and the node B. The node B is a next-hop node to which the node A forwards the packet carrying the destination address X. In this case, a counter array corresponding to the destination network node B for the node A includes only one counter corresponding to the next-hop node B. The counter is configured to record a total count of traffic forwarded from the node A to the node D in another area through the node B.

For another example, for the scenario 3 shown in FIG. 5, it is assumed that there is no other node between the node A and the node B or the node C, and the virtual destination network node is preconfigured for the node B and the node C. The virtual destination network node is a next-hop node to which the node A forwards the packet carrying the destination address X. In this case, a counter array corresponding to the virtual destination network node of the node A includes only one counter corresponding to the virtual destination network node. The counter is configured to record a sum of total counts of traffic forwarded from the node A to the node D in another area through the node B and the node C.

In addition, for one counter in a same counter array, the counter may be marked by using a combination of an identifier of a destination network node and an identifier of the next-hop node. In other words, after the destination network nodes of the first network node are determined, for any destination network node, counters in a counter array corresponding to the destination network node may be created by using an identifier of the destination network node and the identifier of the next-hop node as an index, so that the counters can be subsequently found based on the index. In addition, the total count in the traffic count result may be the total quantity of sent packets, or may be the total quantity of bytes of sent packets. Therefore, the counter in this embodiment of this application may be a packet quantity counter. Any counter is configured to count a total quantity of packets forwarded through a corresponding next-hop node. The counter may also be a packet byte (Byte) quantity counter. Any counter is configured to count a total quantity of bytes of packets forwarded through a corresponding next-hop node. For example, for any counter, if a packet whose length is N bytes is forwarded through a next-hop node corresponding to the counter, the counter increases a traffic count result by N.

The foregoing traffic count results may be updated each time after the first network node forwards a packet, so that the traffic count result can represent a total count of traffic recently forwarded by a corresponding node. Therefore, in a possible implementation, for a to-be-forwarded first packet, the first network node may obtain a first destination address of the to-be-forwarded first packet; determine the first destination network node based on the first destination address, where the first destination network node includes an egress node on a path for forwarding the first packet by the first network node in the area; and update a traffic count result corresponding to the first destination network node. Because the destination network nodes are determined based on the destination addresses, after the destination network nodes are determined, the destination network nodes determined based on the destination addresses may be stored in a correspondence between the destination address and the destination network node, to generate the correspondence between the destination address and the destination network node. In this scenario, an implementation of determining the first destination network node based on the first destination address may be: obtaining, from the correspondence between the destination address and the destination network node, a destination network node corresponding to the first destination address, to obtain the first destination network node.

For example, Table 1 is a correspondence between a destination address and a destination network node according to this embodiment of this application. As shown in Table 1, in the correspondence, a destination address 1 corresponds to a destination network node 1, a destination address 2 corresponds to a destination network node 2, and a destination address N corresponds to a destination network node N. It is assumed that the first destination address is the destination address 2, and based on the correspondence shown in Table 1, it may be determined that the first destination network node is the destination network node 2.

**Table 1**

| Destination address | Destination network node |
|---|---|
| Destination address 1 | Destination network node 1 |
| Destination address 1 | Destination network node 2 |
| Destination address 2 | Destination network node 2 |
| ... | ... |
| Destination address N | Destination network node N |

It should be noted that in Table 1, an example in which one destination address corresponds to one destination network node is used for description. Optionally, one destination address may also correspond to a plurality of destination network nodes. For example, for the scenario 3 shown in FIG. 5, if no virtual destination node is configured for the node B and the node C, a destination network node corresponding to the destination address X includes the node B and the node C.

In addition, it can be learned based on the foregoing process of determining the destination network node that, in a possible implementation, if no virtual destination network node is configured, all determined egress nodes are directly used as the destination network nodes. In this case, the first destination network node is an egress node on a path for forwarding the first packet to the first destination address by the first network node.

In another possible implementation, if the virtual destination network node is configured, when there is one egress node on the path for forwarding a packet to the first destination address by the first network node, the first destination network node is the egress node on the path for forwarding the first packet to the first destination address by the first network node. When there are a plurality of egress nodes on the path for forwarding the first packet to the first destination address by the first network node, the first destination network node is a virtual destination network node corresponding to the plurality of egress nodes.

Further, if there are a plurality of next-hop nodes on a path from the first network node to the first destination network node, in this scenario, to separately collect statistics on a total count of traffic transmitted from next-hop nodes, the traffic count result corresponding to the first destination network node includes traffic count results corresponding to the next-hop nodes, and each of the traffic count results corresponding to the next-hop nodes respectively includes a total count of packets forwarded to the first destination network node through the corresponding next-hop node.

In this scenario, because a routing and forwarding table includes next-hop nodes respectively corresponding to a plurality of destination addresses, an implementation of updating the count result corresponding to the first destination network node may be: obtaining, from the routing and forwarding table, one or more next-hop nodes corresponding to the first destination address, and selecting, from the one or more next-hop nodes, a next-hop node for forwarding the first packet, to obtain a target next-hop node; and updating a traffic count result corresponding to the target next-hop node in the traffic count result corresponding to the first destination network node.

An implementation process of updating the traffic count result corresponding to the target next-hop node may be: searching for a counter corresponding to the target next-hop node; and updating a traffic count result in the found counter.

In a possible implementation, if the counters in the counter array corresponding to the destination network node are pre-created by using the identifier of the destination network node and the identifier of the next-hop node as the index, a to-be-updated counter may be directly found based on an identifier of the first destination network node and an identifier of the target next-hop node as an index.

In another possible implementation, to determine addresses of the counters, so as to quickly update the count result, a start address of the counter array corresponding to the first destination network node may be further configured in the routing and forwarding table for the first destination address. In this scenario, an implementation process of searching for the counter corresponding to the target next-hop node may be: determining, based on the target next-hop node and the start address of the counter array corresponding to the first destination network node configured for the first destination address in the routing and forwarding table, an address of the counter corresponding to the target next-hop node; and searching, based on the address of the counter corresponding to the target next-hop node, for the counter corresponding to the target next-hop node.

It should be noted that, when there are the plurality of next-hop nodes, the next-hop node is usually selected in an equal-cost load balancing manner according to a hash algorithm. In other words, the first destination address carried in the first packet is mapped according to the hash algorithm. A probability of mapping the first destination address to the next-hop nodes in the hash algorithm is the same. After the next-hop node is determined by using the hash algorithm, because offset addresses of addresses of the counters corresponding to the next-hop nodes relative to the start address of the counter array is known, the address of the counter corresponding to the target next-hop node may be determined based on the target next-hop node and the start address of the counter array corresponding to the first destination network node further configured for the first destination address in the routing and forwarding table.

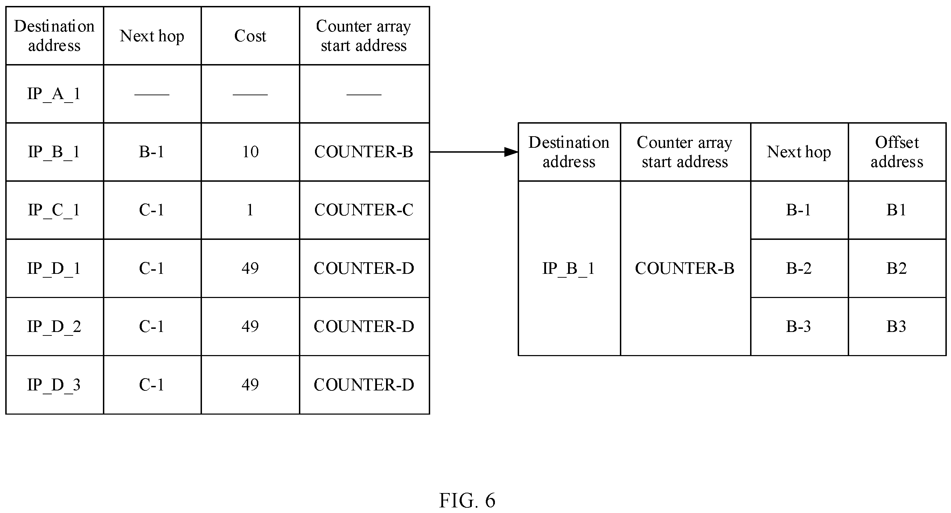

A table shown on the left of FIG. 6 is a schematic diagram of a routing and forwarding table according to an embodiment of this application. The routing and forwarding table shown in FIG. 6 is a routing and forwarding table after the start address of the counter array is added to the routing and forwarding table of the node A shown in FIG. 3. As shown in FIG. 3, for the node A, the routing and forwarding table includes six destination addresses: IP_A_1, IP_B_1, IP_C_1, IP_D_1, IP_D_2, and IP_D_3. Because the destination address IP_A_1 is an address of a device directly connected to the destination address IP_A_1, a next hop and a cost for the destination address IP_A_1 do not exist, and are marked as a dashed line in FIG. 6. A destination network node determined for the destination address IP_B_1 is the node B. Therefore, a start address of a counter array configured for the destination network node B is marked as COUNTER-B, and the start address COUNTER-B is added to an entry corresponding to the destination address IP_B_1. The entry further includes information B-1 about a next-hop node for forwarding a packet carrying the destination address IP_B_1 and a total link cost of 10. A destination network node determined for the destination address IP_C_1 is the node C. Therefore, a start address of a counter array configured for the destination network node C is marked as COUNTER-C, and the start address COUNTER-C is added to an entry corresponding to the destination address IP_C_1. The entry further includes information C-1 about a next-hop node for forwarding a packet carrying the destination address IP_C_1 and a total link cost of 1. Destination network nodes determined for the destination addresses IP_D_1, IP_D_2, and IP_D_3 are all the node D. A start address of a counter array configured for the destination network node D is marked as COUNTER-D, and the start address COUNTER-D is separately added to entries corresponding to the destination addresses IP_D_1, IP_D_2, and IP_D_3. Next-hop information included in the three entries is all C-1 and total link costs are all 49.

It can be learned that, compared with the routing and forwarding table shown in FIG. 3 in this embodiment of this application, the routing and forwarding table shown in FIG. 6 includes an entry of the destination address IP_B_1 to which the start address COUNTER-B of the counter array is added. In the routing and forwarding table, the start address COUNTER-C of the counter array is added to an entry of the destination address IP_C_1. In the routing and forwarding table, the start address COUNTER-D of the counter array is added to entries of the destination addresses IP_D_1, IP_D_2, and IP_D_3.

In addition, the offset addresses of the addresses of the counters corresponding to the next-hop nodes relative to the start address of the counter array is known. Therefore, as shown in FIG. 6, it is assumed that a destination network node corresponding to the destination address IP_B_1 corresponds to three next-hop nodes: B-1, B-2, and B-3. In this case, the first network node further locally stores offset addresses of counters corresponding to the three next-hop nodes relative to the start address COUNTER-B of the counter array.

According to the schematic diagram of the routing and forwarding table and the offset address shown in FIG. 6, when forwarding a packet carrying any destination address, the node A may determine, based on the table shown on the left of FIG. 6, a start address of a counter array corresponding to the destination address, and then determine an address of a specific counter based on a table shown on the right of FIG. 6 by using a next-hop node used when the packet is forwarded, to update a corresponding traffic count result based on the determined counter address.

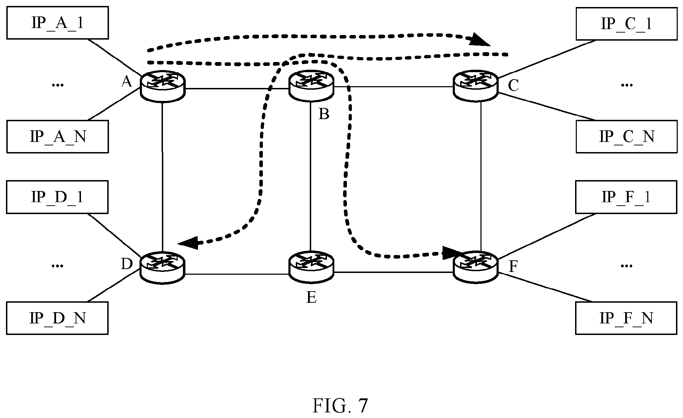

FIG. 7 is a schematic diagram of an architecture of another communication network according to an embodiment of this application. The communication network includes six network nodes A, B, C, D, E, and F. Addresses of devices directly connected to the node A are (IP_A_1, IP_A_2, ..., and IP_A_N). Addresses of devices directly connected to the node D are (IP_D_1, IP_D_2, ..., and IP_D_N). Addresses of devices directly connected to the node C are (IP_C_1, IP_C_2, ..., and IP_C_N). Addresses of devices directly connected to the node F are (IP_F_1, IP_F_2, ..., and IP_F_N). Table 2 is a schematic diagram of count results of destination network nodes corresponding to the node A. As shown in Table 2, a traffic count result corresponding to the destination network node C is 2 G, and this indicates that a total count of traffic from a host directly connected to the node A (this type of host sends a packet whose source addresses include IP_A_1, IP_A_2, ..., and IP_A_N, and destination addresses include IP_C_1, IP_C_2, ..., and IP_C_N) to a host directly connected to node F is 2 G. A traffic count result corresponding to the destination network node F is 3 G, which is used to indicate that a total count of traffic from the host directly connected to the node A (this type of host sends a packet whose source addresses include IP_A_1, IP_A_2, ..., and IP_A_N, and destination addresses include IP_F_1, IP_F_2, ..., and IP_F_N) to the host directly connected to node F is 3 G. A count result corresponding to other destination network nodes is 0, and this indicates that the host directly connected to the node A does not send traffic to a host directly connected to the several destination network nodes.

**Table 2**

| Destination address | Destination network node | Count result |
|---|---|---|
| IP_B_1 | B | 0 |
| ... | | |
| IP_C_1 | C | 2G |
| ... | | |
| IP_D_1 | D | 0 |
| ... | | |
| IP_E_1 | E | 0 |
| ... | | |
| IP_F_1 | F | 3G |
| ... | | |

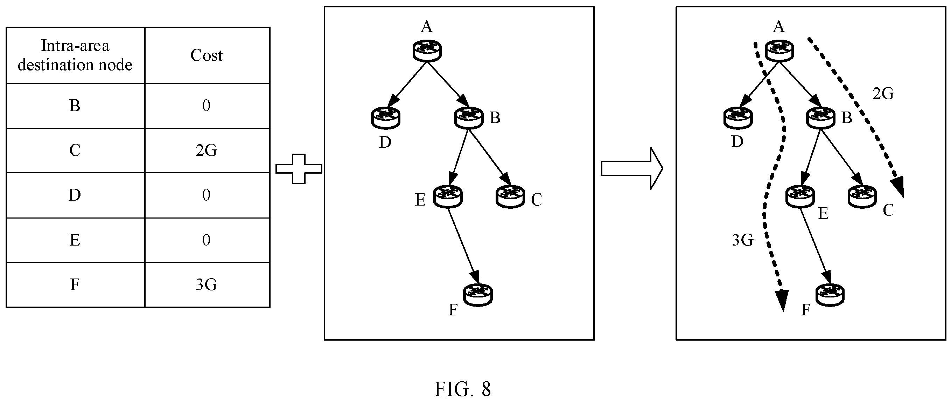

After determining the count results corresponding to the destination network nodes, the node A may determine traffic distribution on paths according to a minimum spanning tree of the node A. FIG. 8 is a schematic diagram of traffic distribution of the node A in the communication network shown in FIG. 7 according to an embodiment of this application. As shown in FIG. 8, in the minimum spanning tree, a path from the node A to the node C is: the node A → the node B → the node C, and a path from the node A to the node F is: the node A → the node B → the node E → the node F. With reference to the count result shown in Table 1, as shown in FIG. 8, it can be learned that a total count of traffic transmitted on the path: the node A → the node B → the node C is 2 G, and a total count of traffic transmitted on the path: the node A → the node B → the node E → the node F is 3 G.

Table 3 and Table 4 respectively show traffic statistics data collected by the node B and the node E. As shown in Table 3, for the node B shown in FIG. 7, a traffic count result corresponding to the destination network node C is 2 G, and this indicates that a total count of traffic from the node B to a host directly connected to the network node C is 2 G. A traffic count result corresponding to the destination network node D is 2 G, and this indicates that a total count of traffic from the node B to a host directly connected to the network node D is 2 G. A traffic count result corresponding to the destination network node F is 3 G, and this indicates that a total count of traffic from the node B to a host directly connected to the network node F is 3 G. A traffic count result corresponding to other destination network nodes is 0, and this indicates that the node B does not send traffic to a host directly connected to the several destination network nodes.

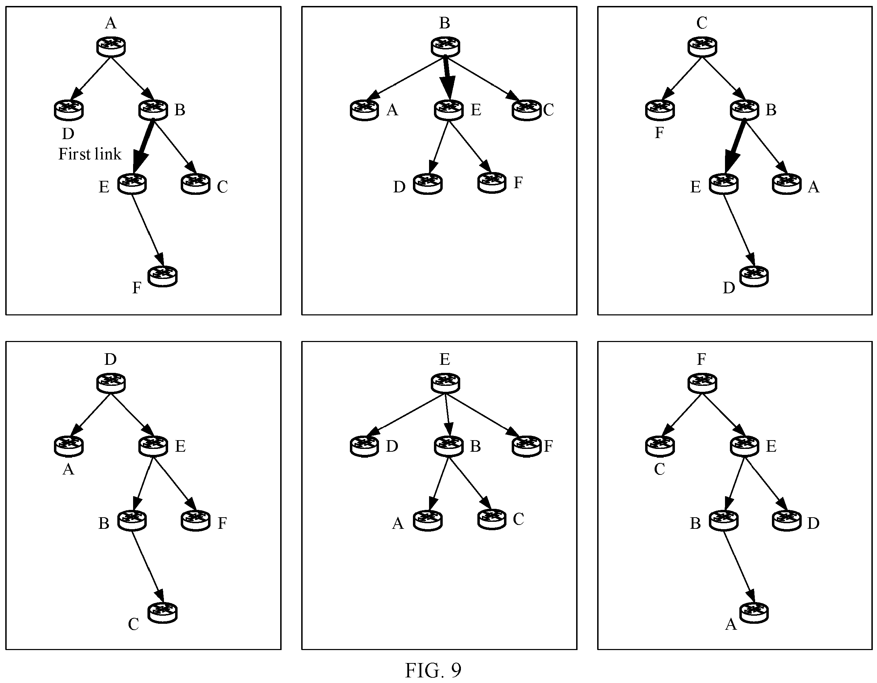

With reference to the network architecture shown in FIG. 7 and the minimum spanning trees of nodes in FIG. 9, the traffic count result corresponding to the destination network node C collected by the node B is 2 G, and this indicates a total count of traffic transmitted on a path: the node B → the node C. Similarly, the count result corresponding to the destination network node F collected by the node B is 3 G, and this indicates a total count of traffic transmitted on a path: the node B → the node E → the node F. The count result corresponding to the destination network node D collected by the node B is 2 G, which is used to indicate that a total count of traffic transmitted on a path: the node B → the node E → the node D is 2 G.

**Table 3**

| Destination address | Destination network node | Count result |
|---|---|---|
| IP_A_1 | A | 0 |
| ... | | |
| IP_C_1 | C | 2G |
| ... | | |
| IP_D_1 | D | 2G |
| ... | | |
| IP_E_1 | E | 0 |
| ... | | |
| IP_F_1 | F | 3G |
| ... | | |

As shown in Table 4, for the node E shown in FIG. 7, a traffic count result corresponding to the destination network node D is 2 G, and this indicates that a total count of traffic from the node E to a host directly connected to the network node D is 2 G. A traffic count result corresponding to the destination network node F is 3 G, and this indicates that a total count of traffic from the node E to a host directly connected to the network node F is 3 G. A traffic count result corresponding to other destination network nodes is 0, and this indicates that the node E does not send traffic to a host directly connected to the several destination network nodes.

With reference to the minimum spanning trees of the node E shown in FIG. 9, it can be learned that a total count of traffic transmitted on a path: the node E → the node D is 2 G, and a total count of traffic transmitted on a path: the node E → the node F is 3 G.

**Table 4**

| Destination address | Destination network node | Count result |
|---|---|---|
| IP_B_1 | B | 0 |
| ... | | |
| IP_C_1 | C | 0 |
| ... | | |
| IP_D_1 | D | 2G |
| ... | | |
| IP_A_1 | A | 0 |
| ... | | |
| IP_F_1 | F | 3G |
| ... | | |

In addition, local traffic distribution of the network nodes may be analyzed by the network nodes based on traffic statistics data of the destination network nodes collected by the network nodes. Optionally, the control node may also perform this operation. This is not specifically limited in this embodiment of this application.

Step 402: The first network node sends the collected traffic statistics data to the control node in the network. Based on the system architecture shown in FIG. 1, the first network node may actively report the traffic statistics data collected by the first network node, or may passively send the traffic statistics data in response to a request of the control node. Details are not described herein again.

In the foregoing step 401 and step 402, the first network node is used as an example to explain how the network nodes locally collect the traffic statistics data. For an implementation in which any other network node collects the traffic statistics data, refer to step 401 and step 402.

After the network nodes in the network send the collected traffic statistics data to the control node in the network, the control node may analyze the traffic distribution feature in the communication network based on the following step 403 and step 404.

Step 403: The control node obtains the traffic statistics data collected by the network nodes in the network.

For an implementation of how the control node obtains the traffic statistics data collected by the network nodes in the plurality of network nodes in the communication network, refer to the explanation in step 402. Details are not described herein again.

Step 404: The control node determines the traffic distribution feature in the network based on traffic statistics data collected by each network node.

In this embodiment of this application, if a link is overloaded, a traffic source on the link needs to be analyzed, to control the traffic source, and control traffic on the link. Therefore, in a possible implementation, the traffic distribution feature in the communication network may include traffic on any link in the communication network includes traffic sent by which source node, to be specific, a source of the traffic. Therefore, in a possible implementation, for any first link in the communication network, the control node determines the traffic distribution feature in the communication network, to be specific, determines a total count of traffic forwarded by source nodes to the first link. The following description uses an example in which a total count of traffic forwarded to the first link by using the first network node as a source node is determined. After the total count of traffic forwarded to the first link by the source nodes is obtained, a source of traffic on the link is determined.

The first link is a link from a second network node to a third network node. The second network node and the third network node are two network nodes in the plurality of network nodes. In other words, the first link is any link. In this scenario, an implementation of step 404 may be: determining, based on traffic statistics data collected by the first network node, a total count of traffic transmitted to the first link through the first network node, to obtain a first count result; and determining, based on traffic statistics data collected by an upstream node of the first network node, a total count of traffic transmitted to the first link through the upstream node of the first network node, to obtain a second count result. A difference between the first count result and the second count result is determined as the total count of traffic forwarded to the first link by using the first network node as the source node. The upstream node is a network node that is in the plurality of network nodes and that is on a path including the first network node that forwards a packet to the first link.

Because the traffic forwarded by the first network node to the first link may also include the traffic forwarded by the upstream node of the first network node to the first link, when a traffic count result of traffic forwarded to the first link by using the first network node as the source node is determined, only the total count of traffic transmitted to the first link through the first network node and the total count of traffic transmitted to the first link through the upstream node of the first network node need to be determined. The difference between the two total counts is the total count of traffic forwarded to the first link by using the first network node as the source node.

The upstream node of the first network node is a network node on a path including the first network node that forwards a packet to the first link. The upstream node of the first network node may be predetermined by the control node. In a possible implementation, an implementation process in which the control node determines the upstream node of the first network node may be: The control node may determine paths for forwarding a packet to the first link by network nodes other than the first network node in the plurality of network nodes; and obtain, from the determined paths, a path including the first network node, and use a network node corresponding to the obtained path as the upstream node of the first network node.

The control node may determine, based on minimum spanning trees of other network nodes other than the first network node, paths for forwarding a packet to the first link by the network nodes other than the first network node.

For example, for the communication network shown in FIG. 7, it is assumed that the first link is a link: the node B → the node E. It is assumed that the first network node is the node B, the other network nodes include the node A, the node C, the node D, the node E, and the node F. It can be learned from the minimum spanning trees of the network nodes shown in FIG. 9 that the minimum spanning trees of the node A, the node B, and the node C include the first link: the node B → the node E. In addition, a path for transmitting a packet from the node A to the first link is from the node A to the node B, and a path for transmitting a packet from the node C to the first link is from the node C to the node B. Both the two paths include the node B. Therefore, the node A and the node C are upstream nodes on a path for transmitting a packet to the first link by the node B.

In addition, an implementation of determining, based on the traffic statistics data collected by the first network node, the total count of traffic transmitted to the first link through the first network node may be: determining that paths from the first network node to the destination network node include a path of the first link, and using the destination network node corresponding to the determined path as a statistics node; obtaining, from the traffic statistics data collected by the first network node, a count result corresponding to the statistics node; and determining, based on a traffic count result corresponding to the statistics node, the total count of the traffic transmitted to the first link through the first network node.

When there is only one determined statistics node, a traffic count result collected by the first network node corresponding to the statistics node may be directly used as the total count of traffic transmitted to the first link through the first network node. Correspondingly, when there are a plurality of determined destination nodes, a plurality of traffic count results that are collected by the first network node and that are in a one-to-one correspondence with the plurality of statistics nodes may be added to obtain a sum, and the sum is used as the total count of traffic transmitted to the first link through the first network node.

The path including the first link in the paths from the first network node to the destination network nodes may also be determined based on a minimum spanning tree of the first network node. Details are not described herein again.

It can be learned that, in this embodiment of this application, a total count of traffic destined for a specified link by using a given device N as a source may be a sum of traffic count results corresponding to a device set that includes the specified link in a path from the device N to another device (the another device is a destination network node), to be specific, a total count of traffic from the device N to the link. For example, in the minimum spanning tree of the node A shown in FIG. 9, a path from the node A to the node E includes a link B → E, and a path from the node A to the node F also includes the link B → E. Therefore, a total count of traffic to the link B → E through the node A is a sum of a traffic count result corresponding to the node E and a traffic count result corresponding to the node F that are collected by the node A.

After the total count of traffic transmitted to the first link through the first network node and the total count of traffic transmitted to the first link through the upstream node of the first network node are determined, the difference between the two total counts may be determined as the total count of traffic transmitted to the first link by using the first network node as the source.

For example, for the communication network shown in FIG. 7 and the minimum spanning trees of the network nodes shown in FIG. 9, it is assumed that the first network node is the node A. A path from another node to the link B → E does not include the node A, to be specific, the node A has no upstream node for the link B → E. Therefore, in step 403, it may be determined that a total count of traffic destined for B → E by using the node A as a source is a sum of traffic count results corresponding to E and F in the minimum spanning tree of the node A.

For another example, for the communication network shown in FIG. 7 and the minimum spanning trees of the network nodes shown in FIG. 9, it is assumed that the first network node is the node C. A path from another node to the link B → E does not include the node C, to be specific, the node C has no upstream node for the link B → E. Therefore, in step 403, it may be determined that a total count of traffic destined for B → E by using the node C as a source is a sum of traffic count results corresponding to E and D in the minimum spanning tree of the node C.

For another example, for the communication network shown in FIG. 7 and the minimum spanning trees of the network nodes shown in FIG. 9, it is assumed that the first network node is the node B. A path from other nodes A and C to the link B → E includes the node B, to be specific, the node B has upstream nodes A and C for the link B → E. Therefore, in step 403, the first count result may be first obtained based on a sum of traffic count results corresponding to D, E, and F in the minimum spanning tree of the node B, and then a sum of traffic count results of traffic transmitted by the upstream nodes A and C of the node B to the link B → E is determined to obtain the second count result. The difference between the first count result and the second count result is a total count of traffic transmitted to the link B → E by using the node B as a source.

The foregoing node without an upstream node may further be referred to as a root upstream node or a root upstream device, and the node with an upstream node may further be referred to as a non-root upstream node or a non-root upstream device. This is not specifically limited in this embodiment of this application.

In addition, when composition of traffic on the first link is determined in step 404, because only the upstream node of the first link transmits a packet to the first link, in step 404, only traffic count results of traffic transmitted to the first link by using upstream nodes of the first link as a source may be determined. In this case, in step 404, the first network node is one node in the upstream nodes of the first link.

The upstream node of the first link is a node that can transmit a packet to the first link. Specifically, in a minimum spanning tree of a node, if the minimum spanning tree includes the first link, the node is used as the upstream node of the first link.

Therefore, in a possible implementation, the control node may predetermine an upstream node of links, to obtain an upstream node set of the links. Then, for any link, in step 404, a total count of traffic transmitted to the link by using upstream nodes as a source in the corresponding upstream node set is determined.

For example, the link B → E is used as an example. In the figure, the minimum spanning trees of the nodes A, B, and C all include the link. Therefore, an upstream node set of the link B → C is {A, B, C}. In other words, the nodes A, B, and C are upstream nodes of the link B → C. In the foregoing implementations, total counts of traffic transmitted to the link B → C by using the nodes A, B, and C as sources are separately determined, that is, a traffic distribution feature on the link.

In conclusion, based on step 401, the network nodes in the communication network may collect the traffic statistics data. A node-based aggregation traffic count function is added to a chip of the network node. This function enables each network node to collect statistics on traffic to the destination network nodes through the network node, to collect a local aggregation traffic status. For example, for the communication network shown in FIG. 7, the network node B may collect, based on step 401, that a total count of traffic to D through B is 2 G, a total count of traffic to F through B is 3 G, and a total count of traffic to C through B is 3 G.

Then, the control node in the communication network may obtain a network-wide traffic status by using the foregoing step 403 to step 404. In other words, the control node may combine network-wide aggregation traffic based on the traffic statistics data collected by the network nodes, to generate a network-wide traffic model. The network-wide traffic model is an obtained traffic status distribution feature of the communication network. For example, for the communication network shown in FIG. 7, the control node collects traffic statistics data collected locally by the nodes A to F, and obtains the following traffic distribution feature based on the implementation in step 404: (1) A total count of traffic to the node C by using the node A as the source node is 2 G, a total count of traffic to the node F by using the node A as the source node is 3 G, and a total count of traffic to the node D by using the node C as the source node is 2 G.

In this embodiment of this application, after determining the traffic distribution feature in the communication network, the control node may further evaluate utilization of the links based on a network-wide traffic distribution feature, and generate threshold-crossing and overload alarms. For example, for the communication network shown in FIG. 7, the control node obtains a total traffic count of the link B → E in the foregoing step 404, and finds that the total traffic count of the link is obviously higher than a total traffic count of another link. In this case, alarm information may be generated to notify an administrator to make appropriate adjustment, so as to reduce a load of the link.

In addition, after determining that a link is overloaded, the control node may add, for an overload location, a logical link (shortcut) used for load sharing, to alleviate overload. The logical link may also be referred to as a tunnel. A proper cost value is set for the tunnel based on the traffic distribution feature and delivered to the network node, so that the network node can offload some traffic to the tunnel based on the cost value.

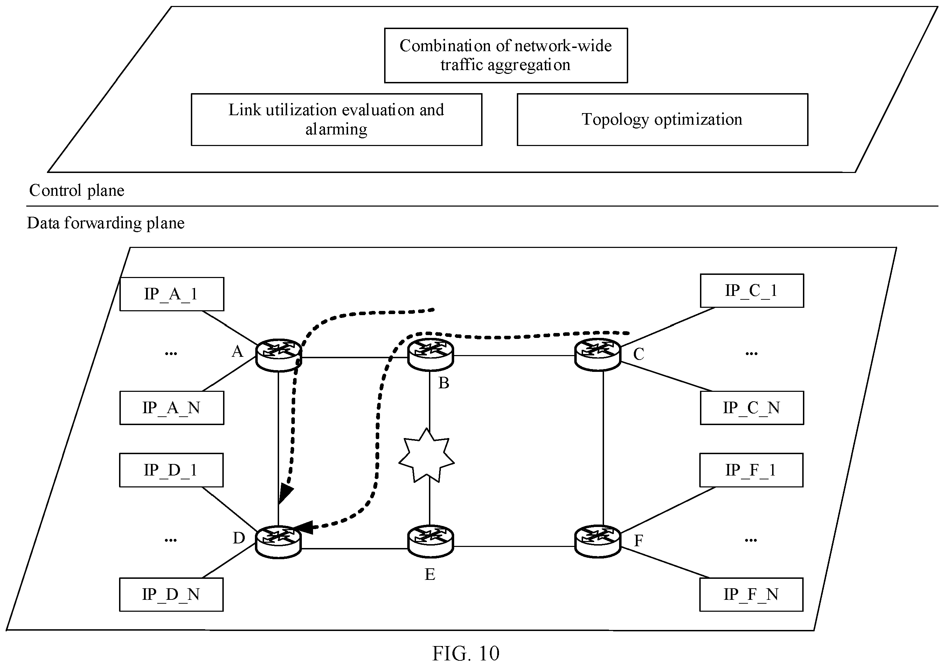

For example, for the communication network shown in FIG. 7, as shown in FIG. 10, the control node determines, according to a topology optimization algorithm, that traffic from C to D may arrive at the destination node D from B → A → D instead of B → E → D. Therefore, a tunnel B → A → D is added to the node B on the control node, and a cost value of the tunnel is set to be less than a sum of cost values of links B → E and E → D.

After receiving newly delivered tunnel-related information, the node B recalculates a path based on a current topology. Because the cost value of the tunnel delivered by the control node is less than the sum of the costs of B → E and E → D, the node B executes the shortest path algorithm to generate a shortest path to D, to be specific, B directly arrives at D through the tunnel. In other words, a new forwarding path of traffic from the node C to D is C → B → A → D. It can be learned that, as shown in FIG. 10, based on traffic statistics data collected by a data forwarding plane, a control plane may combine network-wide traffic aggregation based on the traffic statistics data collected by the network nodes, to obtain the network-wide traffic distribution feature. In this case, link utilization evaluation and alarming may be further implemented based on the obtained network-wide traffic distribution feature, and topology optimization of a forwarding packet may also be implemented based on the obtained network-wide traffic distribution feature.

It should be noted that the foregoing three aspects are merely three applications of the traffic monitoring method provided in the embodiments of this application. The traffic monitoring method provided in the embodiments of this application may alternatively be applied to another scenario. Details are not described herein again.

The following describes structures of nodes in the communication network provided in this embodiment of this application.

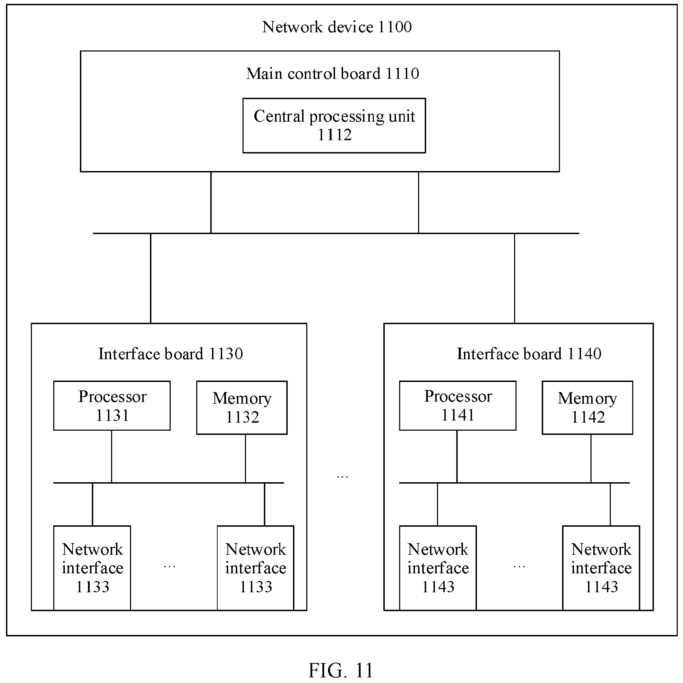

FIG. 11 is a schematic diagram of a structure of a network device according to an embodiment of this application. The network device may be any network node in a plurality of network nodes included in a communication network in any one of the foregoing embodiments. The network device 1100 may be a switch, a router, or another network device that forwards a packet. In this embodiment, the network device 1100 includes a main control board 1110, an interface board 1130, and an interface board 1140. When there are a plurality of interface boards, a switching board (not shown in the figure) may be included. The switching board is configured to implement data exchange between interface boards (the interface board is also referred to as a line card or a service board).

The main control board 1110 is configured to complete functions such as system management, device maintenance, and protocol processing. The interface boards 1130 and 1140 are configured to provide various service interfaces (for example, a POS interface, a GE interface, and an ATM interface), and forward a packet. The main control board 1110 mainly includes three types of function units: a system management and control unit, a system clock unit, and a system maintenance unit. The main control board 1110, the interface board 1130, and the interface board 1140 are connected to a system backboard by using a system bus to implement interworking. The interface board 1130 includes one or more processors 1131. The processor 1131 is configured to control and manage the interface board, communicate with a central processing unit on the main control board, and forward a packet. A memory 1132 on the interface board 1130 is configured to store a forwarding entry or a routing and forwarding table. The processor 1131 forwards a packet by searching the forwarding entry or the routing and forwarding table stored in the memory 1132.

The interface board 1130 includes one or more network interfaces 1133, configured to receive a packet sent by a previous-hop node, and send a processed packet to a next-hop node according to instructions of the processor 1131. Specific implementation processes are not described herein again. In addition, in this embodiment of this application, the one or more network interfaces 1133 are further configured to send the traffic statistics data in step 401 to a control node, so that the control node can determine a traffic count result distribution feature in the communication network by using step 403 and step 404 in FIG. 4. The processor 1131 may be configured to determine the count result included in step 401. Specific functions of the processor 1131 are not described herein again.

It may be understood that, as shown in FIG. 11, this embodiment includes a plurality of interface boards, and uses a distributed forwarding mechanism. In this mechanism, operations on the interface board 1140 are basically similar to operations on the interface board 1130. For brevity, details are not described again. In addition, it may be understood that the processor 1131 and/or 1141 on the interface board in FIG. 11 may be dedicated hardware or a chip, for example, a network processor or an application-specific integrated circuit (application-specific integrated circuit) to implement the foregoing functions. This implementation is generally referred to as a manner of using dedicated hardware or a chip for processing on a forwarding plane. For a specific implementation of using the network processor, namely, the dedicated hardware or the chip, refer to the embodiment shown in FIG. 11. In another implementation, the processor 1131 and/or the processor 1141 may alternatively be a general-purpose processor, for example, a general-purpose CPU, to implement the foregoing functions.

In addition, it should be noted that there may be one or more main control boards. When there are a plurality of main control boards, the main control boards may include an active main control board and a backup main control board. There may be one or more interface boards, and a device having a stronger data processing capability provides more interface boards. If there are a plurality of interface boards, the plurality of interface boards can communicate with each other by using one or more switching boards, and the plurality of interface boards can jointly implement load sharing and redundancy backup. In a centralized forwarding architecture, the device may not need the switching board, and the interface board provides a function of processing service data of an entire system. In a distributed forwarding architecture, the device includes a plurality of interface boards. Data exchange between the plurality of interface boards may be implemented by using a switching board, and the plurality of interface boards can provide a large-capacity data exchange and processing capability. Therefore, a data access and processing capability of a network device in the distributed architecture is better than that of a device in the centralized architecture. A specific architecture to be used depends on a specific networking deployment scenario, and is not limited herein.

In a specific embodiment, the memory 1132 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of instructions or a data structure and that can be accessed by a computer. However, the memory is not limited thereto. The memory 1132 may exist independently, and is connected to the processor 1131 by using a communication bus. The memory 1132 may alternatively be integrated with the processor 1131.

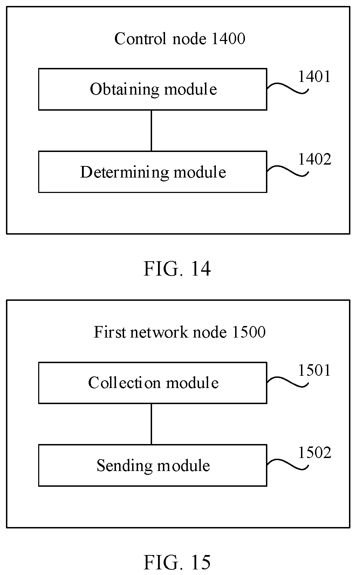

The memory 1132 is configured to store program code, and execution is controlled by the processor 1131, to perform the packet forwarding method provided in the foregoing embodiment. The processor 1131 is configured to execute the program code stored in the memory 1132. The program code may include one or more software modules. The one or more software modules may be the software module provided in an embodiment in FIG 15.

In a specific embodiment, the network interface 1133 may be an apparatus that uses any transceiver, and is configured to communicate with another device or a communication network, for example, the Ethernet, a radio access network (radio access network, RAN), and a wireless local area network (wireless local area networks, WLAN).

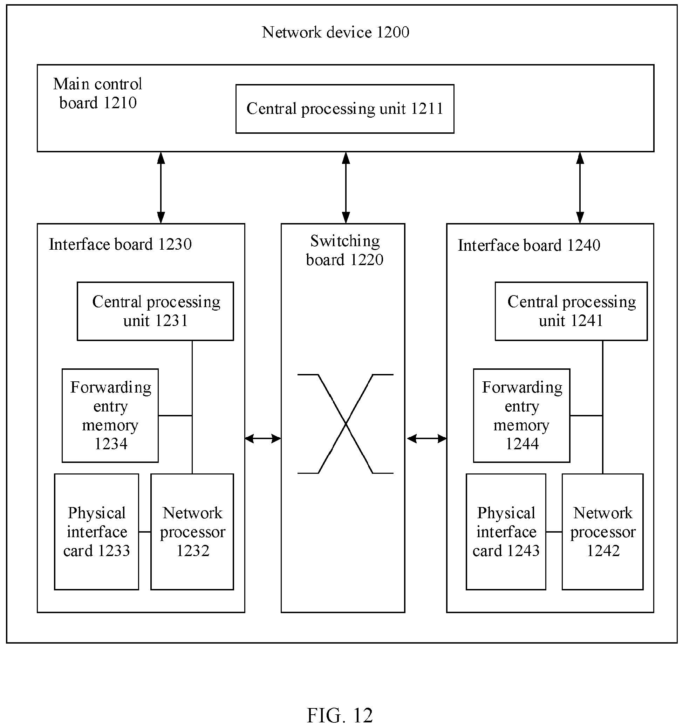

FIG. 12 is a schematic diagram of a structure of another network device according to an embodiment of this application. The network device may be a first network node in a plurality of network nodes in a communication network provided in any embodiment of the foregoing figures. The network device 1200 may be a switch, a router, or another network device that forwards a packet. In this embodiment, the network device 1200 includes a main control board 1210, an interface board 1230, a switching board 1220, and an interface board 1240. The main control board 1210 is configured to complete functions such as system management, device maintenance, and protocol processing. The switching board 1220 is configured to exchange data between interface boards (the interface board is also referred to as a line card or a service board). The interface boards 1230 and 1240 are configured to provide various service interfaces (for example, a POS interface, a GE interface, and an ATM interface), and forward a data packet. A control plane includes management and control units of the main control board 1210 and management and control units on the interface boards 1230 and 1240. The main control board 1210 mainly includes three types of function units: a system management and control unit, a system clock unit, and a system maintenance unit. The main control board 1210, the interface boards 1230 and 1240, and the switching board 1220 are connected to a system backboard through a system bus for communication. A central processing unit 1231 on the interface board 1230 is configured to control and manage the interface board, and communicate with a central processing unit on a main control board. A memory 1234 is configured to store a forwarding entry or a routing and forwarding table on the interface board 1230. A network processor 1232 forwards a packet by searching the forwarding entry or the routing and forwarding table stored in the memory 1234.

The network processor 1232 is configured to determine the count result included in step 401, to obtain traffic statistics data. Specific functions of the network processor 1232 are not described herein again.

The physical interface card 1233 is further configured to send the traffic statistics data collected in step 401 to a control node, so that the control node can determine a traffic count result distribution feature in the communication network by using step 403 to step 404 in FIG. 4. A specific implementation process is not described herein again.

It may be understood that, as shown in FIG. 12, this embodiment includes a plurality of interface boards, and uses a distributed forwarding mechanism. In this mechanism, operations on the interface board 1240 are basically similar to operations on the interface board 1230. For brevity, details are not described again. In addition, as described above, functions of network processors 1232 and 1242 in FIG. 12 may be replaced with that of an application-specific integrated circuit (application-specific integrated circuit).

In addition, it should be noted that there may be one or more main control boards. When there are a plurality of main control boards, the main control boards may include an active main control board and a backup main control board. There may be one or more interface boards, and a device having a stronger data processing capability provides more interface boards. There may also be one or more physical interface cards on the interface board. There may be no switching board or one or more switching boards. When there are a plurality of switching boards, load sharing and redundancy backup may be implemented by the switching boards together. In a centralized forwarding architecture, the device may not need the switching board, and the interface board provides a function of processing service data of an entire system. In a distributed forwarding architecture, the device may have at least one switching board, and data exchange between a plurality of interface boards is implemented through the switching board, to provide a large-capacity data exchange and processing capability. Therefore, a data access and processing capability of a network device in the distributed architecture is better than that of a device in the centralized architecture. A specific architecture to be used depends on a specific networking deployment scenario, and is not limited herein.

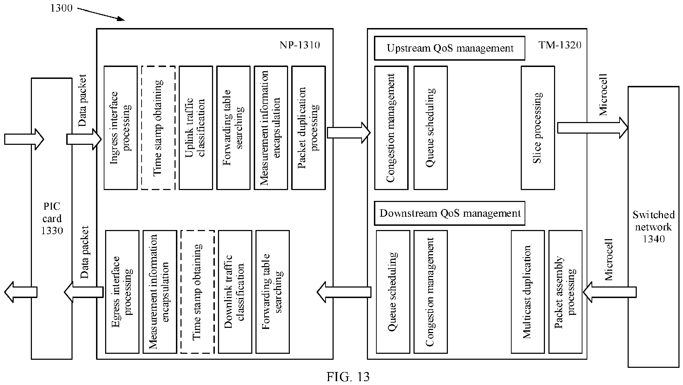

FIG. 13 is a schematic diagram of a structure of an interface board 1300 in the network device shown in FIG. 12 according to an embodiment of this application. A network device in which the interface board 1300 is located may be a first network node in a plurality of network nodes included in the communication network in any one of the foregoing embodiments. The interface board 1300 may include a physical interface card (physical interface card, PIC) 1330, a network processor (network processor, NP) 1310, and a traffic count result management (traffic management) module 1320.

The PIC physical interface card (physical interface card) is configured to implement a physical layer interconnection function. An original traffic count result enters the interface board of the network device, and a processed packet is sent from the PIC card.

The network processor NP 1310 is configured to forward a packet. Specifically, processing of an upstream packet includes: ingress interface processing of a packet, timestamp obtaining, upstream traffic classification, forwarding table searching, measurement information encapsulation, and packet duplication processing. Processing of a downstream packet includes: forwarding table searching, downstream traffic classification, timestamp obtaining, measurement information encapsulation, egress port processing, and the like.

The traffic count result management TM module 1320 is configured to implement functions such as QoS, line-rate forwarding, large-capacity buffering, and queue management. Specifically, uplink traffic count result management includes uplink QoS processing (such as congestion management and queue scheduling) and slice processing. Downlink traffic count result management includes packet assembly processing, multicast duplication, and downlink QoS processing (such as congestion management and queue scheduling).

It may be understood that if the network device has a plurality of interface boards 1300, the plurality of interface boards 1300 may communicate with each other by using a switched network 1340.

It should be noted that FIG. 13 shows only an example of a processing procedure or modules inside the NP. A processing sequence of the modules during specific implementation is not limited thereto. In addition, in actual application, another module or processing procedure may be deployed based on a requirement. This is not limited in this embodiment of this application.

FIG. 14 is a schematic diagram of a structure of a control node in a network according to an embodiment of this application. The network further includes a plurality of network nodes. As shown in FIG. 14, the control node 1400 includes:
an obtaining module 1401, configured to obtain traffic statistics data collected by each of the plurality of network nodes. For a specific implementation, refer to step 403 in the embodiment in FIG. 4.

Traffic statistics data collected by a first network node in the plurality of network nodes includes a traffic count result of traffic from the first network node to a destination network node that belongs to a same area as the first network node, the destination network node includes an egress node on a path for forwarding a packet by the first network node in the area, and the traffic count result includes a total count of packets forwarded by the first network node to the destination network node.

The control node further includes a determining module 1402, configured to determine a traffic distribution feature in the network based on the traffic statistics data collected by each network node. For a specific implementation, refer to step 404 in the embodiment in FIG. 4.

Optionally, the traffic distribution feature includes a total count of traffic forwarded to the first link by using the first network node as a source node, the first link is a link from a second network node to a third network node, and the second network node and the third network node are network nodes in the plurality of network nodes.

The determining module is configured to:
determine, based on the traffic statistics data collected by the first network node, the total count of the traffic transmitted to the first link through the first network node, to obtain a first count result;
determine, based on traffic statistics data collected by an upstream node of the first network node, a total count of traffic transmitted to the first link through the upstream node of the first network node, to obtain a second count result, where the upstream node is a node that is in the plurality of network nodes and that is on a path including the first network node that forwards a packet to the first link; and
calculate a difference between the first count result and the second count result, and use the difference as the total count of the traffic forwarded to the first link by using the first network node as the source node. Optionally, the determining module is configured to:
determine that paths from the first network node to the destination network node include a path of the first link, and use the destination network node corresponding to the determined path as a statistics node;
obtain, from the traffic statistics data collected by the first network node, a traffic count result corresponding to the statistics node; and
determine, based on the traffic count result corresponding to the statistics node, the total count of the traffic transmitted to the first link through the first network node.

Optionally, the determining module is further configured to:
determine paths for forwarding a packet to the first link by network nodes in the plurality of network nodes; and
obtain, from the determined paths, a path including the first network node, and use a network node corresponding to the obtained path as the upstream node of the first network node.

Optionally, when paths for forwarding a packet to a same destination address by the first network node include a plurality of egress nodes, a total count of packets forwarded by the first network node to the plurality of egress nodes is used as a traffic count result corresponding to one virtual destination network node.

Optionally, when there are a plurality of next-hop nodes on paths from the first network node to the same destination network node, a count result corresponding to the same destination network node includes a plurality of count results respectively corresponding to the plurality of next-hop nodes. Each of the plurality of count results includes a total count of packets forwarding traffic to the same destination network node through a corresponding next-hop node.

Optionally, the total count is a total quantity of the packets or a total quantity of bytes of the packets.

In this embodiment of this application, to facilitate the control node to analyze a traffic distribution feature in a communication network, for any network node in the network, each of destination network nodes of the network node respectively corresponds to one traffic count result. For the first network node, because destination network nodes of the first network node include the egress node on the path for forwarding a packet by the first network node in the same area, the control node may learn of, based on traffic count results corresponding to the destination network nodes, traffic transmitted from the first network node to egress nodes. This facilitates the control node to determine the traffic distribution feature in the network. In other words, this embodiment of this application provides a method that network nodes collect local aggregated traffic statuses, and then the control node determines the traffic distribution feature in the communication network based on the local aggregated traffic statuses collected by the network nodes. This avoids a case in which traffic statistics information collected by a node other than a forwarding node is used to implement traffic monitoring.

It should be noted that, when the control node provided in the foregoing embodiment performs traffic monitoring, division of the foregoing function modules is only used as an example for description. In an actual application, the foregoing functions may be allocated to different function modules for implementation as required. In other words, an internal structure of a device is divided into different function modules to implement all or some of the foregoing functions. In addition, the control node provided in the foregoing embodiment belongs to a same concept as the traffic monitoring method embodiments. For a specific implementation process, refer to the method embodiments. Details are not described herein again.

FIG. 15 is a schematic diagram of a structure of a first network node in a network according to an embodiment of this application. As shown in FIG. 15, the first network node 1500 includes:
a collection module 1501, configured to obtain traffic statistics data, where the traffic statistics data includes a traffic count result of traffic from a first network node to a destination network node that belongs to a same area as the first network node, the destination network node includes an egress node on a path for forwarding a packet by the first network node in the area, and the traffic count result includes a total count of packets forwarded by the first network node to the destination network node. For a specific implementation, refer to step 401 in the embodiment in FIG. 4.

The first network node further includes a sending module 1502, configured to send the traffic statistics data to a control node in the network. For a specific implementation, refer to step 402 in the embodiment in FIG. 4.

Optionally, the network node further includes:
an obtaining module, configured to obtain a first destination address of a to-be-forwarded first packet;
a determining module, further configured to determine a first destination network node based on the first destination address, where the first destination network node includes an egress node on a path for forwarding the first packet by the first network node in the area; and
an updating module, configured to update a traffic count result corresponding to the first destination network node.

Optionally, the determining module is configured to:
obtain, from a correspondence between a destination address and a destination network node, a destination network node corresponding to the first destination address, to obtain the first destination network node.

Optionally, when there is one egress node on a path for forwarding the first packet to the first destination address by the first network node, the first destination network node is the egress node on the path for forwarding the first packet to the first destination address by the first network node.

When there are a plurality of egress nodes on the path for forwarding the first packet to the first destination address by the first network node, the first destination network node is a virtual destination network node corresponding to the plurality of egress nodes.

Optionally, the traffic count result corresponding to the first destination network node includes traffic count results respectively corresponding to next-hop nodes, and a traffic count result corresponding to any next-hop node includes a total count of packets forwarded to the first destination network node through the corresponding next-hop node. The updating module is configured to:
obtain, from a routing table, one or more next-hop nodes corresponding to the first destination address, where the routing table includes next-hop nodes respectively corresponding to a plurality of destination addresses;
select, from the one or more next-hop nodes, a next-hop node that forwards the first packet, to obtain a target next-hop node; and
update a traffic count result corresponding to the target next-hop node in the traffic count result corresponding to the first destination network node.

Optionally, a counter array is configured for the first destination network node. The counter array includes counters respectively corresponding to next-hop nodes on a path for forwarding a packet to the first destination network node by the first network node, and the counter includes a traffic count result corresponding to a corresponding next-hop node.

The updating module is configured to:
search for a counter corresponding to the target next-hop node; and
update a traffic count result in the found counter.

Optionally, for the first destination address, a start address of the counter array corresponding to the first destination network node is further configured in the routing table.

The updating module is configured to:
determine, based on the target next-hop node and the start address of the counter array corresponding to the first destination network node configured for the first destination address in the routing table, an address of the counter corresponding to the target next-hop node; and
search, based on the address of the counter corresponding to the target next-hop node, for the counter corresponding to the target next-hop node.

Optionally, the total count is a total quantity of the packets or a total quantity of bytes of the packets.

In this embodiment of this application, to facilitate the control node to analyze a traffic distribution feature in a communication network, for any network node in the network, each of destination network nodes of the network node respectively corresponds to one traffic count result. For the first network node, because destination network nodes of the first network node include the egress node on the path for forwarding a packet by the first network node in the same area, the control node may learn of, based on traffic count results corresponding to the destination network nodes, traffic transmitted from the first network node to egress nodes. This facilitates the control node to determine the traffic distribution feature in the network. In other words, this embodiment of this application provides a method that network nodes collect local aggregated traffic statuses, and then the control node determines the traffic distribution feature in the communication network based on the local aggregated traffic statuses collected by the network nodes. This avoids a case in which traffic statistics information collected by a node other than a forwarding node is used to implement traffic monitoring.

It should be noted that, when the first network node provided in the foregoing embodiment collects the traffic statistics data, division of the foregoing function modules is only used as an example for description. In an actual application, the foregoing functions may be allocated to different function modules for implementation as required. In other words, an internal structure of a device is divided into different function modules to implement all or some of the foregoing functions. In addition, the first network node provided in the foregoing embodiment belongs to a same concept as the traffic monitoring method embodiments. For a specific implementation process, refer to the method embodiments. Details are not described herein again.

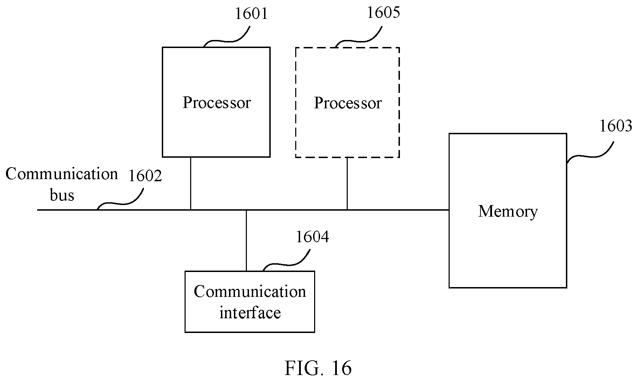

FIG. 16 is a schematic diagram of a structure of a network device according to an embodiment of this application. The network device may be a network node in the foregoing network, or may be a control node. When the network device is the foregoing network node, in this case, the network device 1600 may be a switch, a router, or another network device that forwards a packet. In this case, for a specific function of the network device 1600, refer to a specific implementation of the first network node in the embodiment in FIG. 4. For details, refer to step 401 and step 402. Details are not described herein again. When the network device is the control node, for a specific function of the network device 1600 in this case, refer to a specific implementation of the control node in the embodiment in FIG. 4. For details, refer to step 403 and step 404. Details are not described herein again. Refer to FIG. 16. The network device includes at least one processor 1601, a communication bus 1602, a memory 1603, and at least one communication interface 1604.

The processor 1601 may be a general-purpose central processing unit (central processing unit, CPU), an application-specific integrated circuit (application-specific integrated circuit, ASIC), or one or more integrated circuits configured to control program execution of the solutions of this application. When the network device is used as any network node in a plurality of network nodes in a communication network, the processor 1601 is configured to determine traffic statistics data. When the network device is used as a control node in the communication network, the processor 1601 is configured to analyze a traffic distribution feature of the communication network based on traffic statistics data determined by a forwarding node. Specific functions are not described herein again.

The communication bus 1602 may include a path, to transmit information between the foregoing components.

The memory 1603 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of instructions or a data structure and that can be accessed by a computer. However, the memory is not limited thereto. The memory 1603 may exist independently, and be connected to the processor 1601 through the communication bus 1602. The memory 1603 may be integrated with the processor 1601.

The memory 1603 is configured to store application program code for executing the solutions in this application, and the processor 1601 controls execution of the application program code. The processor 1601 is configured to execute the program code stored in the memory 1603. The program code may include one or more software modules. The control node or any forwarding node in a plurality of forwarding nodes in the foregoing embodiment may determine, by using the processor 1601 and one or more software modules in the program code in the memory 1603, data used for developing an application. The one or more software modules may be the software module provided in any embodiment in FIG. 14 or FIG. 15.

The communication interface 1604 is any apparatus such as a transceiver, and is configured to communicate with another device or communication network, for example, the Ethernet, a radio access network (radio access network, RAN), a wireless local area network (wireless local area network, WLAN), and the like. When the network device is used as any network node in the plurality of network nodes in the communication network, the communication interface 1604 may be configured to report the traffic statistics data to the control node. For a specific implementation, refer to step 402 in the embodiment in FIG. 4. When the network device is used as the control node in the communication network, the communication interface 1604 is configured to receive the traffic statistics data reported by the network node. For a specific implementation, refer to step 403 in the embodiment in FIG. 4.

In a specific implementation, in an embodiment, the network device may include a plurality of processors, for example, the processor 1601 and a processor 1605 in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

The foregoing network device may be a general-purpose network device or a dedicated network device. In specific implementation, the network device may be a desktop, a portable computer, a network server, a personal digital assistant (personal digital assistant, PDA), a mobile phone, a tablet computer, a wireless terminal device, a communication device, or an embedded device. A type of the network device is not limited in this embodiment of this application.

It may be understood that, when the network device shown in FIG. 16 is any network node in the foregoing method embodiments, this embodiment may also be implemented based on a virtual first network node implemented by a general-purpose physical server in combination with a network functions virtualization NFV technology, and the virtual first network node is a virtual router. In addition, a second, a third, and an N^{th} network nodes may be virtualized (according to an actual requirement). The virtual first network node may be a virtual machine (English: Virtual Machine, VM) on which a program providing a packet sending function runs, and the virtual machine is deployed on a hardware device (for example, a physical server). The virtual machine is a complete software-simulated computer system that has complete hardware system functions and runs in an entirely isolated environment. After reading the embodiments of this application, with reference to the NFV technology, a person skilled in the art may virtualize, on the general physical server, a plurality of first network nodes having the foregoing functions. Details are not described herein.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like.

A person skilled in the art should be aware that in the foregoing one or more examples, functions described in the embodiments of this application may be implemented by hardware, software, firmware, or any combination thereof. When the functions described in the embodiments of this application are implemented by the software, the foregoing functions may be stored in a computer-readable medium or transmitted as one or more instructions or code in the computer-readable medium. The computer-readable medium includes a computer storage medium and a communication medium, where the communication medium includes any medium that facilitates transmission of a computer program from one place to another place. The storage medium may be any available medium accessible to a general-purpose or special-purpose computer.

The objectives, technical solutions, and benefits of the embodiments of this application are further described in detail in the foregoing specific implementations. It should be understood that the foregoing descriptions are merely specific embodiments of this application.

## Claims

1. A traffic monitoring method, applied to a control node in a network, wherein the network further comprises a plurality of network nodes, and the method comprises:
receiving (403), from each of the plurality of network nodes, traffic statistics data collected by each of the plurality of network nodes, wherein
traffic statistics data collected by a first network node in the plurality of network nodes comprises a traffic count result of traffic from the first network node to a destination network node that belongs to a same area as the first network node, the destination network node comprises an egress node on a path for forwarding a packet by the first network node in the area, and the traffic count result comprises a total count of packets forwarded by the first network node to the destination network node; and
determining (404) a traffic distribution feature in the network based on the traffic statistics data collected by each network node,
**characterized in that** when paths for forwarding a packet to a same destination address by the first network node comprise a plurality of egress nodes, a total count of packets forwarded by the first network node to the plurality of egress nodes is used as a traffic count result corresponding to one virtual destination network node.

2. The method according to claim 1, wherein the traffic distribution feature comprises a total count of traffic forwarded to a first link by using the first network node as a source node, the first link is a link from a second network node to a third network node, and the second network node and the third network node are network nodes in the plurality of network nodes; and
the determining a traffic distribution feature in the network based on the traffic statistics data collected by each network node comprises:
determining, based on the traffic statistics data collected by the first network node, the total count of the traffic transmitted to the first link through the first network node, to obtain a first count result;
determining, based on traffic statistics data collected by an upstream node of the first network node, a total count of traffic transmitted to the first link through the upstream node of the first network node, to obtain a second count result, wherein the upstream node is a node that is in the plurality of network nodes and that is on a path comprising the first network node that forwards a packet to the first link; and
calculating a difference between the first count result and the second count result, and using the difference as the total count of the traffic forwarded to the first link by using the first network node as the source node.

3. The method according to claim 2, wherein the determining, based on the traffic statistics data collected by the first network node, the total count of the traffic transmitted to the first link through the first network node comprises:
determining that paths from the first network node to the destination network node comprise a path to the first link, and using the destination network node corresponding to the determined path as a statistics node;
obtaining, from the traffic statistics data collected by the first network node, a traffic count result corresponding to the statistics node; and
determining, based on the traffic count result corresponding to the statistics node, the total count of the traffic transmitted to the first link through the first network node.

4. The method according to claim 2 or 3, wherein before the determining, based on traffic statistics data collected by an upstream node of the first network node, a total count of traffic transmitted to the first link through the upstream node of the first network node, the method further comprises:
determining paths for forwarding a packet to the first link by network nodes in the plurality of network nodes; and
obtaining, from the determined paths, a path that comprises the first network node, and using a network node corresponding to the obtained path as the upstream node of the first network node.

5. The method according to any one of claims 1 to 4, wherein when there are a plurality of next-hop nodes on paths from the first network node to a same destination network node, a count result corresponding to the same destination network node comprises a plurality of count results respectively corresponding to the plurality of next-hop nodes, and each of the plurality of count results comprises a total count of packets forwarded to the same destination network node through a corresponding next-hop node.

6. The method according to any one of claims 1 to 5, wherein the total count of packets is a total quantity of the packets or a total quantity of bytes of the packets.

7. A traffic monitoring method, applied to a first network node in a network, wherein the method comprises:
obtaining (401) traffic statistics data, wherein the traffic statistics data comprises a traffic count result of traffic from the first network node to a destination network node that belongs to a same area as the first network node, the destination network node comprises an egress node on a path for forwarding a packet by the first network node in the area, and the traffic count result comprises a total count of packets forwarded by the first network node to the destination network node; and
sending (402) the traffic statistics data to a control node in the network, wherein the method further comprises:
obtaining a first destination address of a to-be-forwarded first packet;
determining a first destination network node based on the first destination address, wherein the first destination network node comprises an egress node on a path for forwarding the first packet by the first network node in the area; and
updating a traffic count result corresponding to the first destination network node,
**characterized in that** when there are a plurality of egress nodes on paths for forwarding packets to the first destination address by the first network node, the first destination network node is a virtual destination network node corresponding to the plurality of egress nodes.

8. The method according to claim 7, wherein the determining a first destination network node based on the first destination address comprises:
obtaining, from a correspondence between a destination address and a destination network node, a destination network node corresponding to the first destination address, to obtain the first destination network node.

9. The method according to any one of claims 7 to 8, wherein the traffic count result corresponding to the first destination network node comprises traffic count results respectively corresponding to next-hop nodes, and a traffic count result corresponding to any next-hop node comprises a total count of packets forwarded to the first destination network node through the corresponding next-hop node; and
the updating a traffic count result corresponding to the first destination network node comprises:
obtaining, from a routing and forwarding table, one or more next-hop nodes corresponding to the first destination address, wherein the routing and forwarding table comprises next-hop nodes respectively corresponding to a plurality of destination addresses;
selecting, from the one or more next-hop nodes, a next-hop node that forwards the first packet, to obtain a target next-hop node; and
updating a traffic count result corresponding to the target next-hop node in the traffic count result corresponding to the first destination network node.

10. A control node in a network, wherein the network further comprises a plurality of network nodes, and the control node comprises:
an obtaining module, configured to receive, from each of the plurality of network nodes, traffic statistics data collected by each of the plurality of network nodes, wherein
traffic statistics data collected by a first network node in the plurality of network nodes comprises a traffic count result of traffic from the first network node to a destination network node that belongs to a same area as the first network node, the destination network node comprises an egress node on a path for forwarding a packet by the first network node in the area, and the traffic count result comprises a total count of packets forwarded by the first network node to the destination network node; and
a determining module, configured to determine a traffic distribution feature in the network based on the traffic statistics data collected by each network node
**characterized in that** when paths for forwarding a packet to a same destination address by the first network node comprise a plurality of egress nodes, a total count of packets forwarded by the first network node to the plurality of egress nodes is used as a traffic count result corresponding to one virtual destination network node.

11. A first network node in a network, wherein the first network node comprises:
a collection module, configured to obtain traffic statistics data, wherein the traffic statistics data comprises a traffic count result of traffic from the first network node to a destination network node that belongs to a same area as the first network node, the destination network node comprises an egress node on a path for forwarding a packet by the first network node in the area, and the traffic count result comprises a total count of packets forwarded by the first network node to the destination network node; and
a sending module, configured to send the traffic statistics data to a control node in the network,
wherein the first network node further comprises:
an obtaining module, configured to obtain a first destination address of a to-be-forwarded first packet;
a determining module, further configured to determine a first destination network node based on the first destination address, wherein the first destination network node comprises an egress node on a path for forwarding the first packet by the first network node in the area; and
an updating module, configured to update a traffic count result corresponding to the first destination network node,
**characterized in that** when there are a plurality of egress nodes on paths for forwarding packets to the first destination address by the first network node, the first destination network node is a virtual destination network node corresponding to the plurality of egress nodes.

12. Computer-readable storage medium comprising instructions, wherein when the instructions are run on a computer, the computer is enabled to perform the traffic monitoring method according to according to any one of claims 1 to 6 or the traffic monitoring method according to according to any one of claims 7 to 9.

13. Computer program product including instructions, wherein when the instructions are run on a computer, the computer is enabled to perform the traffic monitoring method according to according to any one of claims 1 to 6 or the traffic monitoring method according to according to any one of claims 7 to 9.

## Patentansprüche

1. Verkehrsüberwachungsverfahren, das auf einen Steuerknoten in einem Netzwerk angewendet wird, wobei das Netzwerk ferner eine Vielzahl von Netzwerkknoten umfasst und das Verfahren umfasst:
Empfangen (403), von jedem der Vielzahl von Netzwerkknoten, der Verkehrsstatistikdaten, die durch jeden der Vielzahl von Netzwerkknoten erhoben werden, wobei
die Verkehrsstatistikdaten, die durch einen ersten Netzwerkknoten in der Vielzahl von Netzwerkknoten erhoben werden, ein Verkehrszählungsergebnis des Verkehrs von dem ersten Netzwerkknoten zu einem Zielnetzwerkknoten, der zu einem selben Bereich wie der erste Netzwerkknoten gehört, umfassen, der Zielnetzwerkknoten einen Ausgangsknoten auf einem Pfad zum Weiterleiten eines Pakets durch den ersten Netzwerkknoten in dem Bereich umfasst und das Verkehrszählungsergebnis eine Gesamtzählung der Pakete, die durch den ersten Netzwerkknoten an den Zielnetzwerkknoten weitergeleitet werden, umfasst; und
Bestimmen (404) eines Verkehrsverteilungsmerkmals in dem Netzwerk basierend auf den durch jeden Netzwerkknoten erhobenen Verkehrsstatistikdaten,
**dadurch gekennzeichnet, dass** dann, wenn Pfade zum Weiterleiten eines Pakets an eine selbe Zieladresse durch den ersten Netzwerkknoten eine Vielzahl von Ausgangsknoten umfassen, eine Gesamtzählung der durch den ersten Netzwerkknoten an die Vielzahl von Ausgangsknoten weitergeleiteten Pakete als ein einem virtuellen Zielnetzwerkknoten entsprechendes Verkehrszählungsergebnis verwendet wird.

2. Verfahren nach Anspruch 1, wobei das Verkehrsverteilungsmerkmal eine Gesamtzählung des Verkehrs, der durch Verwenden des ersten Netzwerkknotens als Herkunftsknoten an eine erste Verbindung weitergeleitet wird, umfasst, wobei die erste Verbindung eine Verbindung von einem zweiten Netzwerkknoten zu einem dritten Netzwerkknoten ist und der zweite Netzwerkknoten und der dritte Netzwerkknoten Netzwerkknoten in der Vielzahl von Netzwerkknoten sind; und
das Bestimmen eines Verkehrsverteilungsmerkmals in dem Netzwerk basierend auf den durch jeden Netzwerkknoten erhobenen Verkehrsstatistikdaten umfasst:
Bestimmen, basierend auf den durch den ersten Netzwerkknoten erhobenen Verkehrsstatistikdaten, einer Gesamtzählung des über den ersten Netzwerkknoten an die erste Verbindung übertragenen Verkehrs, um ein erstes Zählergebnis zu erhalten; Bestimmen, basierend auf den durch einen dem ersten Netzwerkknoten vorgelagerten Knoten erhobenen Verkehrsstatistikdaten, einer Gesamtzählung des Verkehrs, der über den dem ersten Netzwerkknoten vorgelagerten Knoten an die erste Verbindung übertragen wird, um ein zweites Zählergebnis zu erhalten, wobei der vorgelagerte Knoten ein Knoten ist, der zu der Vielzahl von Netzwerkknoten gehört und der sich auf einem Pfad befindet, der den ersten Netzwerkknoten umfasst, der ein Paket an die erste Verbindung weiterleitet; und
Berechnen der Differenz zwischen dem ersten Zählergebnis und dem zweiten Zählergebnis und Verwenden der Differenz als die Gesamtzählung des Verkehrs, der durch Verwenden des ersten Netzwerkknotens als Herkunftsknoten an die erste Verbindung weitergeleitet wird.

3. Verfahren nach Anspruch 2, wobei das Bestimmen, basierend auf den durch den ersten Netzwerkknoten erhobenen Verkehrsstatistikdaten, der Gesamtzählung des über den ersten Netzwerkknoten an die erste Verbindung übertragenen Verkehrs umfasst:
Bestimmen, dass Pfade von dem ersten Netzwerkknoten zu dem Zielnetzwerkknoten einen Pfad zu der ersten Verbindung umfassen, und Verwenden des Zielnetzwerkknotens, der dem bestimmten Pfad entspricht, als Statistikknoten;
Erhalten eines dem Statistikknoten entsprechenden Verkehrszählungsergebnisses aus den durch den ersten Netzwerkknoten erhobenen Verkehrsstatistikdaten; und Bestimmen, basierend auf dem Verkehrszählungsergebnis, das dem Statistikknoten entspricht, der Gesamtzählung des Verkehrs, der über den ersten Netzwerkknoten an die erste Verbindung übertragen wird.

4. Verfahren nach Anspruch 2 oder 3, wobei das Verfahren vor dem Bestimmen, basierend auf den durch einen dem ersten Netzwerkknoten vorgelagerten Knoten erhobenen Verkehrsstatistikdaten, einer Gesamtzählung des Verkehrs, der über den dem erstem Netzwerkknoten vorgelagerten Knoten an die erste Verbindung übertragen wird, ferner umfasst:
Bestimmen von Pfaden zum Weiterleiten eines Pakets an die erste Verbindung durch Netzwerkknoten der Vielzahl von Netzwerkknoten; und
Erhalten, aus den bestimmten Pfaden, eines Pfades, der den ersten Netzwerkknoten umfasst, und Verwenden eines Netzwerkknotens, der dem erhaltenen Pfad entspricht, als den dem ersten Netzwerkknoten vorgelagerten Knoten.

5. Verfahren nach einem der Ansprüche 1 bis 4, wobei dann, wenn eine Vielzahl von Next-Hop-Knoten auf Pfaden von dem ersten Netzwerkknoten zu einem selben Zielnetzwerkknoten vorhanden ist, ein Zählergebnis, das demselben Zielnetzwerkknoten entspricht, eine Vielzahl von Zählergebnissen umfasst, die jeweils der Vielzahl von Next-Hop-Knoten entsprechen, und jedes der Vielzahl von Zählergebnissen eine Gesamtzählung von Paketen umfasst, die über einen entsprechenden Next-Hop-Knoten an denselben Zielnetzwerkknoten weitergeleitet werden.

6. Verfahren nach einem der Ansprüche 1 bis 5, wobei die Gesamtzählung der Pakete entweder die Gesamtzahl der Pakete oder die Gesamtzahl der Bytes der Pakete ist.

7. Verkehrsüberwachungsverfahren, das auf einen ersten Netzwerkknoten in einem Netzwerk angewendet wird, wobei das Verfahren umfasst:
Erhalten (401) von Verkehrsstatistikdaten, wobei die Verkehrsstatistikdaten ein Verkehrszählungsergebnis des Verkehrs von dem ersten Netzwerkknoten zu einem Zielnetzwerkknoten, der zu einem selben Bereich wie der erste Netzwerkknoten gehört, umfassen, der Zielnetzwerkknoten einen Ausgangsknoten auf einem Pfad zum Weiterleiten eines Pakets durch den ersten Netzwerkknoten in dem Bereich umfasst und das Verkehrszählungsergebnis eine Gesamtzählung der Pakete, die durch den ersten Netzwerkknoten an den Zielnetzwerkknoten weitergeleitet werden, umfasst; und Senden (402) der Verkehrsstatistikdaten an einen Steuerknoten in dem Netzwerk, wobei das Verfahren ferner umfasst:
Erhalten einer ersten Zieladresse eines weiterzuleitenden ersten Pakets;
Bestimmen eines ersten Zielnetzwerkknotens basierend auf der ersten Zieladresse, wobei der erste Zielnetzwerkknoten einen Ausgangsknoten auf einem Pfad zum Weiterleiten des ersten Pakets durch den ersten Netzwerkknoten in dem Bereich umfasst; und
Aktualisieren eines dem ersten Zielnetzwerkknoten entsprechenden Verkehrszählungsergebnisses,
**dadurch gekennzeichnet, dass** dann, wenn auf Pfaden zum Weiterleiten von Paketen an die erste Zieladresse durch den ersten Netzwerkknoten eine Vielzahl von Ausgangsknoten vorhanden ist, der erste Zielnetzwerkknoten ein virtueller Zielnetzwerkknoten ist, der der Vielzahl von Ausgangsknoten entspricht.

8. Verfahren nach Anspruch 7, wobei das Bestimmen eines ersten Zielnetzwerkknotens basierend auf der ersten Zieladresse umfasst:
Erhalten, aus einer Entsprechung zwischen einer Zieladresse und einem Zielnetzwerkknoten, eines Zielnetzwerkknotens, der der ersten Zieladresse entspricht, um den ersten Zielnetzwerkknoten zu erhalten.

9. Verfahren nach einem der Ansprüche 7 bis 8, wobei das dem ersten Zielnetzwerkknoten entsprechende Verkehrszählungsergebnis jeweils Next-Hop-Knoten entsprechende Verkehrszählergebnisse umfasst, und ein einem Next-Hop-Knoten entsprechendes Verkehrszählungsergebnis die Gesamtzählung der über den entsprechenden Next-Hop-Knoten an den ersten Zielnetzwerkknoten weitergeleiteten Pakete umfasst; und
das Aktualisieren eines dem ersten Zielnetzwerkknoten entsprechenden Verkehrszählungsergebnisses umfasst:
Erhalten, aus einer Leitungs- und Weiterleitungstabelle, eines oder mehrerer Next-Hop-Knoten, die der ersten Zieladresse entsprechen, wobei die Leitungs- und Weiterleitungstabelle Next-Hop-Knoten umfasst, die jeweils einer Vielzahl von Zieladressen entsprechen;
Auswählen, aus dem einen oder den mehreren Next-Hop-Knoten, eines Next-Hop-Knotens, der das erste Paket weiterleitet, um einen Ziel-Next-Hop-Knoten zu erhalten; und
Aktualisieren eines dem Ziel-Next-Hop-Knoten entsprechenden Verkehrszählungsergebnisses in dem Verkehrszählungsergebnis, das dem ersten Zielnetzwerkknoten entspricht.

10. Steuerknoten in einem Netzwerk, wobei das Netzwerk ferner eine Vielzahl von Netzwerkknoten umfasst und der Steuerknoten umfasst:
ein Erhaltungsmodul, das konfiguriert ist, um von jedem der Vielzahl von Netzwerkknoten Verkehrsstatistikdaten zu empfangen, die durch jeden der Vielzahl von Netzwerkknoten erhoben werden, wobei
die Verkehrsstatistikdaten, die durch einen ersten Netzwerkknoten in der Vielzahl von Netzwerkknoten erhoben werden, ein Verkehrszählungsergebnis des Verkehrs von dem ersten Netzwerkknoten zu einem Zielnetzwerkknoten, der zu einem selben Bereich wie der erste Netzwerkknoten gehört, umfassen, der Zielnetzwerkknoten einen Ausgangsknoten auf einem Pfad zum Weiterleiten eines Pakets durch den ersten Netzwerkknoten in dem Bereich umfasst und das Verkehrszählungsergebnis eine Gesamtzählung der Pakete, die durch den ersten Netzwerkknoten an den Zielnetzwerkknoten weitergeleitet werden, umfasst; und
ein Bestimmungsmodul, das konfiguriert ist, um ein Verkehrsverteilungsmerkmal in dem Netzwerk basierend auf den durch jeden Netzwerkknoten erhobenen Verkehrsstatistikdaten zu bestimmen,
**dadurch gekennzeichnet, dass** dann, wenn Pfade zum Weiterleiten eines Pakets an eine selbe Zieladresse durch den ersten Netzwerkknoten eine Vielzahl von Ausgangsknoten umfassen, eine Gesamtzählung der durch den ersten Netzwerkknoten an die Vielzahl von Ausgangsknoten weitergeleiteten Pakete als ein einem virtuellen Zielnetzwerkknoten entsprechendes Verkehrszählungsergebnis verwendet wird.

11. Erster Netzwerkknoten in einem Netzwerk, wobei der erste Netzwerkknoten umfasst:
ein Erhebungsmodul, das konfiguriert ist, um Verkehrsstatistikdaten zu erhalten, wobei die Verkehrsstatistikdaten ein Verkehrszählungsergebnis des Verkehrs von dem ersten Netzwerkknoten zu einem Zielnetzwerkknoten, der zu einem selben Bereich wie der erste Netzwerkknoten gehört, umfassen, der Zielnetzwerkknoten einen Ausgangsknoten auf einem Pfad zum Weiterleiten eines Pakets durch den ersten Netzwerkknoten in dem Bereich umfasst und das Verkehrszählungsergebnis eine Gesamtzählung der Pakete, die durch den ersten Netzwerkknoten an den Zielnetzwerkknoten weitergeleitet werden, umfasst; und
ein Sendemodul, das konfiguriert ist, um die Verkehrsstatistikdaten an einen Steuerknoten in dem Netzwerk zu senden,
wobei der erste Netzwerkknoten ferner umfasst:
ein Erhaltungsmodul, das konfiguriert ist, um eine erste Zieladresse eines weiterzuleitenden ersten Pakets zu erhalten;
ein Bestimmungsmodul, das ferner konfiguriert ist, um einen ersten Zielnetzwerkknoten basierend auf der ersten Zieladresse zu bestimmen, wobei der erste Zielnetzwerkknoten einen Ausgangsknoten auf einem Pfad zum Weiterleiten des ersten Pakets durch den ersten Netzwerkknoten in dem Bereich umfasst; und
ein Aktualisierungsmodul, das konfiguriert ist, um ein dem ersten Zielnetzwerkknoten entsprechendes Verkehrszählungsergebnis zu aktualisieren,
**dadurch gekennzeichnet, dass** dann, wenn auf Pfaden zum Weiterleiten von Paketen an die erste Zieladresse durch den ersten Netzwerkknoten eine Vielzahl von Ausgangsknoten vorhanden ist, der erste Zielnetzwerkknoten ein virtueller Zielnetzwerkknoten ist, der der Vielzahl von Ausgangsknoten entspricht.

12. Computerlesbares Speichermedium, das Anweisungen umfasst, wobei dann, wenn die Anweisungen auf einem Computer ausgeführt werden, der Computer befähigt wird, das Verkehrsüberwachungsverfahren nach einem der Ansprüche 1 bis 6 oder das Verkehrsüberwachungsverfahren nach einem der Ansprüche 7 bis 9 durchzuführen.

13. Computerprogrammprodukt, das Anweisungen einschließt, wobei dann, wenn die Anweisungen auf einem Computer ausgeführt werden, der Computer befähigt wird, das Verkehrsüberwachungsverfahren nach einem der Ansprüche 1 bis 6 oder das Verkehrsüberwachungsverfahren nach einem der Ansprüche 7 bis 9 durchzuführen.

## Revendications

1. Procédé de surveillance de trafic, appliqué à un nœud de commande dans un réseau, dans lequel le réseau comprend en outre une pluralité de nœuds de réseau, et le procédé comprend :
la réception (403), à partir de chacun de la pluralité de nœuds de réseau, de données de statistiques de trafic collectées par chacun de la pluralité de nœuds de réseau, dans lequel
des données de statistiques de trafic collectées par un premier nœud de réseau dans la pluralité de nœuds de réseau comprennent un résultat de comptage de trafic du trafic allant du premier nœud de réseau à un nœud de réseau de destination qui appartient à une même zone que le premier nœud de réseau, le nœud de réseau de destination comprend un nœud de sortie sur un trajet de transfert d'un paquet par le premier nœud de réseau dans la zone, et le résultat de comptage de trafic comprend un comptage total de paquets transférés par le premier nœud de réseau au nœud de réseau de destination ; et
la détermination (404) d'une caractéristique de distribution de trafic dans le réseau sur la base des données de statistiques de trafic collectées par chaque nœud de réseau, **caractérisé en ce que**, lorsque des trajets de transfert d'un paquet à une même adresse de destination par le premier nœud de réseau comprennent une pluralité de nœuds de sortie, un comptage total de paquets transférés par le premier nœud de réseau à la pluralité de nœuds de sortie est utilisé en tant que résultat de comptage de trafic correspondant à un nœud de réseau de destination virtuel.

2. Procédé selon la revendication 1, dans lequel la caractéristique de distribution de trafic comprend un comptage total du trafic transféré à une première liaison en utilisant le premier nœud de réseau en tant que nœud source, la première liaison est une liaison d'un deuxième nœud de réseau à un troisième nœud de réseau, et le deuxième nœud de réseau et le troisième nœud de réseau sont des nœuds de réseau dans la pluralité de nœuds de réseau ; et
la détermination d'une caractéristique de distribution de trafic dans le réseau sur la base des données de statistiques de trafic collectées par chaque nœud de réseau comprend : la détermination, sur la base des données de statistiques de trafic collectées par le premier nœud de réseau, du comptage total du trafic transmis à la première liaison par l'intermédiaire du premier nœud de réseau, pour obtenir un premier résultat de comptage ; la détermination, sur la base de données de statistiques de trafic collectées par un nœud en amont du premier nœud de réseau, d'un comptage total de trafic transmis à la première liaison par l'intermédiaire du nœud amont du premier nœud de réseau, pour obtenir un second résultat de comptage, dans lequel le nœud en amont est un nœud qui se trouve dans la pluralité de nœuds de réseau et qui se trouve sur un trajet comprenant le premier un nœud de réseau qui transmet un paquet à la première liaison ; et
le calcul d'une différence entre le premier résultat de comptage et le second résultat de comptage, et l'utilisation de la différence en tant que comptage total du trafic transféré à la première liaison en utilisant le premier nœud de réseau en tant que nœud source.

3. Procédé selon la revendication 2, dans lequel la détermination, sur la base des données de statistiques de trafic collectées par le premier nœud de réseau, du comptage total du trafic transmis à la première liaison par l'intermédiaire du premier nœud de réseau comprend :
la détermination du fait que des trajets allant du premier nœud de réseau au nœud de réseau de destination comprennent un trajet à la première liaison, et l'utilisation du nœud de réseau de destination correspondant au trajet déterminé en tant que nœud de statistiques ;
l'obtention, à partir des données de statistiques de trafic collectées par le premier nœud de réseau, d'un résultat de comptage de trafic correspondant au nœud de statistiques ; et
la détermination, sur la base du résultat de comptage de trafic correspondant au nœud de statistiques, du comptage total du trafic transmis à la première liaison par l'intermédiaire du premier nœud de réseau.

4. Procédé selon la revendication 2 ou 3, dans lequel avant la détermination, sur la base de données de statistiques de trafic collectées par un nœud en amont du premier nœud de réseau, d'un comptage total de trafic transmis à la première liaison par l'intermédiaire du nœud amont du premier nœud de réseau, le procédé comprend en outre :
la détermination de trajets de transfert d'un paquet à la première liaison par des nœuds de réseau dans la pluralité de nœuds de réseau ; et
l'obtention, à partir des trajets déterminés, d'un trajet qui comprend le premier nœud de réseau, et l'utilisation d'un nœud de réseau correspondant au trajet obtenu en tant que nœud en amont du premier nœud de réseau.

5. Procédé selon l'une quelconque des revendications 1 à 4, dans lequel, lorsqu'il y a une pluralité de nœuds de saut suivant sur des trajets allant du premier nœud de réseau à un même nœud de réseau de destination, un résultat de comptage correspondant au même nœud de réseau de destination comprend une pluralité de résultats de comptage correspondant respectivement à la pluralité de nœuds de saut suivant, et chacun de la pluralité de résultats de comptage comprend un comptage total de paquets transférés au même nœud de réseau de destination par l'intermédiaire d'un nœud de saut suivant correspondant.

6. Procédé selon l'une quelconque des revendications 1 à 5, dans lequel le comptage total de paquets est une quantité totale des paquets ou une quantité totale d'octets des paquets.

7. Procédé de surveillance de trafic, appliqué à un premier nœud de réseau dans un réseau, dans lequel le procédé comprend :
l'obtention (401) de données de statistiques de trafic, dans lequel les données de statistiques de trafic comprennent un résultat de comptage de trafic du trafic allant du premier nœud de réseau à un nœud de réseau de destination qui appartient à une même zone que le premier nœud de réseau, le nœud de réseau de destination comprend un nœud de sortie sur un trajet de transfert d'un paquet par le premier nœud de réseau dans la zone, et le résultat de comptage de trafic comprend un comptage total de paquets transférés par le premier nœud de réseau au nœud de réseau de destination ; et
l'envoi (402) des données de statistiques de trafic à un nœud de commande dans le réseau, dans lequel le procédé comprend en outre :
l'obtention d'une première adresse de destination d'un premier paquet à transférer ; la détermination d'un premier nœud de réseau de destination sur la base de la première adresse de destination, dans lequel le premier nœud de réseau de destination comprend un nœud de sortie sur un trajet de transfert du premier paquet par le premier nœud de réseau dans la zone ; et
la mise à jour d'un résultat de comptage de trafic correspondant au premier nœud de réseau de destination,
**caractérisé en ce que**, lorsqu'il existe une pluralité de nœuds de sortie sur des trajets de transfert de paquets à la première adresse de destination par le premier nœud de réseau, le premier nœud de réseau de destination est un nœud de réseau de destination virtuel correspondant à la pluralité de nœuds de sortie.

8. Procédé selon la revendication 7, dans lequel la détermination d'un premier nœud de réseau de destination sur la base de la première adresse de destination comprend : l'obtention, à partir d'une correspondance entre une adresse de destination et un nœud de réseau de destination, d'un nœud de réseau de destination correspondant à la première adresse de destination, pour obtenir le premier nœud de réseau de destination.

9. Procédé selon l'une quelconque des revendications 7 à 8, dans lequel le résultat de comptage de trafic correspondant au premier nœud de réseau de destination comprend des résultats de comptage de trafic correspondant respectivement à des nœuds de saut suivant, et un résultat de comptage de trafic correspondant à tout nœud de saut suivant comprend un comptage total de paquets transférés au premier nœud de réseau de destination par l'intermédiaire du nœud de saut suivant correspondant ; et
la mise à jour d'un résultat de comptage de trafic correspondant au premier nœud de réseau de destination comprend :
l'obtention, à partir d'une table de routage et de transfert, d'un ou plusieurs nœuds de saut suivant correspondant à la première adresse de destination, dans lequel la table de routage et de transfert comprend des nœuds de saut suivant correspondant respectivement à une pluralité d'adresses de destination ;
la sélection, parmi le ou les nœuds de saut suivant, d'un nœud de saut suivant qui transfère le premier paquet, pour obtenir un nœud de saut suivant cible ; et
la mise à jour d'un résultat de comptage de trafic correspondant au nœud de saut suivant cible dans le résultat de comptage de trafic correspondant au premier nœud de réseau de destination.

10. Nœud de commande dans un réseau, dans lequel le réseau comprend en outre une pluralité de nœuds de réseau, et le nœud de commande comprend :
un module d'obtention, configuré pour recevoir, à partir de chacun de la pluralité de nœuds de réseau, des données de statistiques de trafic collectées par chacun de la pluralité de nœuds de réseau, dans lequel
des données de statistiques de trafic collectées par un premier nœud de réseau dans la pluralité de nœuds de réseau comprennent un résultat de comptage de trafic du trafic allant du premier nœud de réseau à un nœud de réseau de destination qui appartient à une même zone que le premier nœud de réseau, le nœud de réseau de destination comprend un nœud de sortie sur un trajet de transfert d'un paquet par le premier nœud de réseau dans la zone, et le résultat de comptage de trafic comprend un comptage total de paquets transférés par le premier nœud de réseau au nœud de réseau de destination ; et
un module de détermination, configuré pour déterminer une caractéristique de distribution de trafic dans le réseau sur la base des données de statistiques de trafic collectées par chaque nœud de réseau
**caractérisé en ce que**, lorsque des trajets de transfert d'un paquet à une même adresse de destination par le premier nœud de réseau comprennent une pluralité de nœuds de sortie, un comptage total de paquets transférés par le premier nœud de réseau à la pluralité de nœuds de sortie est utilisé en tant que résultat de comptage de trafic correspondant à un nœud de réseau de destination virtuel.

11. Premier nœud de réseau dans un réseau, dans lequel le premier nœud de réseau comprend :
un module de collecte, configuré pour obtenir des données de statistiques de trafic, dans lequel les données de statistiques de trafic comprennent un résultat de comptage de trafic du trafic allant du premier nœud de réseau à un nœud de réseau de destination qui appartient à une même zone que le premier nœud de réseau, le nœud de réseau de destination comprend un nœud de sortie sur un trajet de transfert d'un paquet par le premier nœud de réseau dans la zone, et le résultat de comptage de trafic comprend un comptage total de paquets transférés par le premier nœud de réseau au nœud de réseau de destination ; et
un module d'envoi, configuré pour envoyer les données de statistiques de trafic à un nœud de commande dans le réseau,
dans lequel le premier nœud de réseau comprend en outre :
un module d'obtention, configuré pour obtenir une première adresse de destination d'un premier paquet à transférer ;
un module de détermination, configuré en outre pour déterminer un premier nœud de réseau de destination sur la base de la première adresse de destination, dans lequel le premier nœud de réseau de destination comprend un nœud de sortie sur un trajet de transfert du premier paquet par le premier nœud de réseau dans la zone ; et
un module de mise à jour, configuré pour mettre à jour un résultat de comptage de trafic correspondant au premier nœud de réseau de destination,
**caractérisé en ce que**, lorsqu'il existe une pluralité de nœuds de sortie sur des trajets de transfert de paquets à la première adresse de destination par le premier nœud de réseau, le premier nœud de réseau de destination est un nœud de réseau de destination virtuel correspondant à la pluralité de nœuds de sortie.

12. Support de stockage lisible par ordinateur comprenant des instructions, dans lequel, lorsque les instructions sont exécutées sur un ordinateur, l'ordinateur est en mesure d'effectuer le procédé de surveillance de trafic selon l'une quelconque des revendications 1 à 6 ou le procédé de surveillance de trafic selon l'une quelconque des revendications 7 à 9.

13. Produit-programme d'ordinateur comportant des instructions, dans lequel, lorsque les instructions sont exécutées sur un ordinateur, l'ordinateur est en mesure d'effectuer le procédé de surveillance de trafic selon l'une quelconque des revendications 1 à 6 ou le procédé de surveillance de trafic selon l'une quelconque des revendications 7 à 9.
